# EUROPÄISCHE PATENTSCHRIFT

(11) **EP 1 499 513 B1**
(45) Veröffentlichungstag und Bekanntmachung des Hinweises auf die Patenterteilung: **31.08.2005**
(21) Anmeldenummer: 03727371.1
(22) Anmeldetag: 25.04.2003
(51) Int. Cl.: B60K 6/04, B60L 11/12, F16H 45/02, F02N 11/04, F16H 3/72, H02K 7/10, H02K 51/00

(54) **HYBRIDANTRIEBSSYSTEM MIT HYDRODYNAMISCHER KUPPLUNG, INSBESONDERE FUER KRAFTFAHRZEUGE**
HYBRID DRIVE SYSTEM COMPRISING A HYDRODYNAMIC CLUTCH, PARTICULARLY FOR MOTOR VEHICLES
SYSTEME D'ENTRAINEMENT HYBRIDE A ACCOUPLEMENT HYDRODYNAMIQUE, NOTAMMENT POUR VEHICULES A MOTEUR

(30) Priorität: 29.04.2002 DE 10219080
(43) Veröffentlichungstag der Anmeldung: 26.01.2005
(73) Patentinhaber: Voith Turbo GmbH & Co. KG, 89522 Heidenheim (DE)
(72) Erfinder: MENNE, Achim, 74564 Crailsheim (DE); HÖLLER, Heinz, 74564 Crailsheim (DE); ZIMMERMANN, Volker, 89520 Heidenheim (DE); KLEMENT, Werner, 89520 Heidenheim (DE)
(74) Vertreter: Koch-Huld, Annegret Christa
(86) Internationale Anmeldenummer: PCT/EP2003/004356
(87) Internationale Veröffentlichungsnummer: WO 2003/093045

(56) Entgegenhaltungen:
- EP-A- 0 913 598
- EP-A- 0 913 601
- WO-A-02/085659
- DE-A- 3 137 197
- DE-A- 4 007 424
- DE-A- 4 225 315
- DE-A- 10 015 681
- US-A- 4 407 398
- US-A- 4 743 776
- US-A- 5 697 466

## Beschreibung

Die Erfindung betrifft ein Antriebssystem, insbesondere für Kraftfahrzeuge, im einzelnen mit den Merkmalen des Anspruchs 1 bzw. 11.

Beispielsweise die DE-A-42 25 315 zeigt ein Antriebssystem insbesondere für Kraftfahrzeuge, mit den folgenden Merkmalen:
einem Antriebsaggregat und wenigstens einer, mit dem Antriebsaggregat gekoppelten Leistungsübertragungseinheit;
einer, mit dem Antriebsaggregat wenigstens mittelbar gekoppelten elektrischen Maschine;
gekennzeichnet durch die folgenden Merkmale:
   die Leistungsübertragungseinheit umfaßt wenigstens ein Anfahrelement in Form eines hydrodynamischen wandlers und eine Überbrückungskupplung;
   der Rotor bzw. Läufer der elektrischen Maschine ist koaxial zum hydrodynamischen wandler angeordnet und mit dieser drehfest koppelbar.

Antriebssysteme, insbesondere mechanische Antriebssysteme mit integrierter elektrischer Maschine in der Funktion eines Startergenerators, sind in einer Vielzahl von Ausführungen bekannt. Stellvertretend wird auf eine Zusammenfassung von Dr.-Ing. Wolfgang Reick, LuK GmbH & Co, Bühl: "Startergenerator im Antriebsstrang", veröffentlicht unter http://www.luk.de/Bibliothek/Vortraege.html, verwiesen. Unter einem derartigen Startergenerator wird dabei eine elektrische Maschine verstanden, deren Rotor direkt auf der Kurbelwelle befestigt ist oder aber parallel zu dieser angeordnet und sowohl als Generator als auch als Motor arbeiten kann. Die elektrische Maschine wird zum Starten der Verbrennungskraftmaschine und ferner als Generator zur Energierückgewinnung aus dem Antriebssystem eingesetzt. Insbesondere die Energierückgewinnung, beispielsweise im Schub- bzw. Schleppbetrieb, gewinnt immer stärkere Bedeutung aufgrund des stark steigenden Bedarfes an elektrischer Energie im Fahrzeug aufgrund der ständigen Erhöhung der Anzahl der elektrisch angetriebenen Komponenten. Da zur Realisierung dieser Funktionen eine bestimmte Dimensionierung der elektrischen Maschine erforderlich ist und damit das System nicht besonders preisgünstig angeboten werden kann, werden zunehmend weitere Funktionen dieser Einheit zugeordnet. Derartige Zusatzfunktionen sind: Start-/Stoppfunktion bei leisem Start, Direktstart, Impulsstart, Booster, Energierückgewinnung im Schub, aktive Synchronisation und die Dämpfung. Die Anordnung der elektrischen Maschine kann dabei koaxial oder exzentrisch zur Kopplung zwischen Verbrennungskraftmaschine und Antriebsstrang, in der Regel Getriebe, erfolgen. Je nach Anordnung wird die elektrische Maschine über eine oder zwei Kupplungen vom Antriebsstrang trennbar angeordnet. Eine Ausführung eines Startergenerators bei Automatikgetrieben mit Wandler ist auf Seite 53 dieses Aufsatzes zu finden. Bei dieser ist der Startergenerator dem hydrodynamischen Drehzahl-/Drehmomentwandler zugeordnet. Im Bauraum der heutigen Lock-up-Kupplung wird dabei lediglich noch eine weitere zweite Kupplung integriert, die den Motor vom Pumpengehäuse trennen kann. Die erste Kupplung dient dabei der Verbindung zwischen Kurbelwelle und dem Rotor, die zweite Kupplung stellt die übliche Lock-up-Kupplung dar. Wird die erste Kupplung geöffnet, kann der Verbrennungsmotor abgestellt werden und die elektrische Maschine wird immer noch betrieben. Es lassen sich also damit alle Zustände realisieren, welche mit einer 2-Kupplungs-Lösung möglich sind, d. h. insbesondere die Funktion als Booster sowie Starter und der Energierückgewinnung. Ein wesentlicher Nachteil des Einsatzes eines Wandlers im Automatgetriebe besteht dabei, daß insbesondere auch bei tiefen Temperaturen trotz der Möglichkeit des Direktstartes oder eines Impulsstartes über die elektrische Maschine die Leistungsübertragung gerade im unteren Gang über den hydrodynamischen Wandler sehr unbefriedigend ist. Die Vorteile, die sich durch den Einsatz des Startergenerators ergeben, werden durch das schlechte Kaltstartverhalten in diesem Zustand wieder zunichte gemacht, was insbesondere für den Einsatz in Automatgetrieben oder automatisierten Schaltgetrieben in entsprechenden Breitenkreisen mit zeitweise sehr tiefen Temperaturen problematisch werden kann. Ferner baut die gesamte Einheit aus elektrischer Maschine und Anfahrkomponente in axialer und radialer Richtung sehr breit. Der erforderliche Bauraum ist dabei im wesentlichen durch den zum Einbau des hydrodynamischen Drehzahl-/Drehmomentwandiers geforderten Bauraum und damit den noch zur Verfügung stehenden Integrationsmöglichkeiten für die elektrische Maschine bedingt. Ein weiterer wesentlicher Nachteil besteht in der nicht gegebenen Möglichkeit der Anpassung der Leistungsaufnahme und der Steuerbarkeit der Leistungsaufnahme des hydrodynamischen Drehzahl-/Drehmomentwandlers. Damit wird in allen Betriebszuständen sofort von diesem die maximal mögliche Leistung aufgenommen, was unter Umständen zu einem unerwünschten Fahrverhalten während des Anfahrvorganges und eventuell auch zum Abwürgen der Antriebsmaschine führen kann.

Der Erfindung liegt daher die Aufgabe zugrunde, ein Antriebssystem der eingangs genannten Art derart weiterzuentwickeln, daß die genannten Nachteile vermieden werden. Im einzelnen ist auf eine Lösung mit verbessertem Kaltstartverhalten abzustellen. Die Lösung soll femer für jegliche Art von Getrieben, insbesondere automatisierte Schaltgetriebe, Schaltgetriebe und CVTs geeignet sein und sich durch einen geringeren Bauraum in axialer als auch in radialer Richtung gegenüber den Ausführungen aus dem Stand der Technik auszeichnen.

Die erfindungsgemäße Lösung ist durch die Merkmale des Anspruchs 1 bzw. 11 charakterisiert. Vorteilhafte Ausgestaltungen sind in den Unteransprüchen wiedergegeben.

Ein Antriebssystem, insbesondere für Kraftfahrzeuge, mit einem Antriebsaggregat und wenigstens einer, mit dem Antriebsaggregat gekoppelten Leistungsübertragungseinheit und einer, mit dem Antriebsaggregat wenigstens mittelbar gekoppelten elektrischen Maschine ist erfindungsgemäß derart gestaltet, daß die Leistungsübertragungseinheit frei von einem hydrodynamischen Drehzahl-/Drehmomentwandler ist und statt dessen eine hydrodynamische Kupplung umfaßt, welcher die elektrische Maschine zugeordnet ist. Die elektrische Maschine ist dabei koaxial zur hydrodynamischen Kupplung angeordnet und mit dieser drehfest verbindbar. Dies bedeutet, daß der Rotor entweder ständig drehfest mit der hydrodynamischen Kupplung verbunden ist oder aber nur zeitweise. Bei der hydrodynamischen Kupplung handelt es sich um eine hydrodynamische Komponente, welche durch das Vorhandensein zweier Schaufelräder, eines Primärschaufelrades und eines Sekundärschaufelrades, charakterisiert ist, die miteinander einen in der Regel torusförmigen Arbeitsraum bilden. Die hydrodynamische Kupplung ist dabei frei von weiteren Schaufelrädern, beispielsweise einem Leitrad. Die Funktion der hydrodynamischen Kupplung besteht in der Leistungsübertragung bei Momentengleichheit zwischen Primärschaufelrad und Sekundärschaufelrad, wobei mit dieser Komponente im Gegensatz zum hydrodynamischen Drehzahl-/Drehmomentwandler nur eine Drehzahlwandlung vorgenommen werden kann.

Die Erfinder haben erkannt, daß zur Ausschaltung der Probleme einer Ausführung gemäß dem Stand der Technik die hydrodynamische Komponente in Form des hydrodynamischen Drehzahl-/Drehmomentwandlers durch eine hydrodynamische Kupplung ersetzt werden kann, da diese gerade bei tiefen Temperaturen, d. h. im kalten Zustand, durch eine wesentlich geringere Leistungsaufnahme als der hydrodynamische Wandler charakterisiert ist. Ferner bietet die Verwendung einer hydrodynamischen Kupplung den Vorteil, daß die erforderliche Baulänge in axialer als auch in radialer Richtung minimiert werden kann, wobei dieser Effekt durch die Ausbildung einer Schrägbeschaufelung noch zusätzlich erhöht werden kann. Die geringere Leistungsaufnahme beim Start mit kaltem Betriebsmittel wird durch die Ausbildung einer freien Strömung gegenüber dem Wandler mit Zwangsströmung im torusförmigen Arbeitsraum ermöglicht.

Ein weiterer wesentlicher Systemvorteil einer Kombination aus einem hydrodynamischen Anfahrelement in Form einer hydrodynamischen Kupplung, welche mit einer elektrischen Maschine in der Funktion eines Startergenerators gekoppelt ist, wobei der Rotor bzw. Läufer dieser elektrischen Maschine koaxial zur hydrodynamischen Kupplung angeordnet ist, besteht im zusätzlich gewonnenen Bauraum sowohl in radialer als auch axialer Richtung, welcher für andere Komponenten genutzt werden kann. Damit ergeben sich absolut effiziente Integrationsvorteile gegenüber einer Lösung mit hydrodynamischen Drehzahl-/Drehmomentwandler, womit insbesondere den erhöhten Anforderungen an den immer mehr verkürzt zur Verfügung stehenden Bauraum beim Einsatz von Antriebssystemen für Fahrzeuge Rechnung getragen werden kann.

Gemäß einer vorteilhaften Ausgestaltung ist die hydrodynamische Kupplung wenigstens mit Teilfüllung betreibbar. Dies bedeutet, daß zur vollen Funktionsfähigkeit keine Vollfüllung vorliegen muß und femer mit der hydrodynamischen Kupplung die Drehzahl auf der Abtriebsseite, d. h. des mit dem Sekundärschaufelrad gekoppelten Teiles, und/oder die Drehzahl der mit dem Primärschaufelrad gekoppelten Teile des Antriebsstranges aktiv gesteuert oder geregelt werden können. Dies bietet den Vorteil, daß hier aktiv auf unterschiedliche Leistungsanforderungen reagiert werden kann. Zu diesem Zweck ist die hydrodynamische Kupplung vorzugsweise steuerbar, wobei die Steuerung über die Änderung des Füllungsgrades erfolgt. Demgemäß ist eine Einrichtung zur Beeinflussung des Füllungsgrades der hydrodynamischen Kupplung vorgesehen. Diese kann vielgestaltig ausgeführt sein. Stellvertretend sei hier nur eine Ausführung einer hydrodynamischen Kupplung mit einem, dem im torusförmigen Arbeitsraum sich einstellenden Strömungskreislauf zugeordneten geschlossenen Kreislauf, welcher außerhalb des torusförmigen Arbeitsraumes geführt und der druckdicht ausgeführt ist, genannt. Der geschlossene Kreislauf ist dabei mit einer Betriebsmittelversorgungsquelle gekoppelt, wobei auch diese Kopplung druckdicht erfolgt. Vorzugsweise ist die Betriebsmittelquelle in Form eines Betriebsmittelsumpfes ausgeführt, wobei die Änderung des Füllungsgrades durch das Aufbringen eines Beeinflussungsdrubkes auf den Betriebsmittelspiegel vorgenommen wird. Als Betriebsmittelsumpf kann dabei ein separates Betriebsmittelversorgungssystem, beispielsweise eine Ölwanne, bei Integration der hydrodynamischen Kupplung als Anfahrkomponente in einer Getriebebaueinheit, der Betriebsmittelsumpf der Getriebebaueinheit oder ein, der Anfahrkomponente der hydrodynamische Kupplung separat zugeordneter, Betriebsmittelsumpf verwendet werden. Neben der Steuerbarkeit der hydrodynamischen Kupplung kann diese auch in Regelvorgänge integriert sein, beispielsweise kann eine Regelung des Füllungsgrades und damit der Leistungsaufnahme erfolgen.

Die hydrodynamische Kupplung fungiert als Anfahrkomponente und ist entweder direkt oder beispielsweise unter Zwischenschaltung eines Schwungrades mit dem Antriebsaggregat, welches in der Regel in der Form einer Verbrennungskraftmaschine ausgeführt ist, gekoppelt. Die Kopplung erfolgt dabei über das Primärschaufelrad. Mit diesem drehfest verbunden ist bei einer Vielzahl von Ausführungen eine sogenannte Primärradschale, welche das Sekundärschaufelrad in axialer und in Umfangsrichtung wenigstens teilweise umschließt. Das Anfahrelement bildet mit der Überbrückungskupplung eine Anfahreinheit. Dieser ist in der Regel in räumlicher Anordnung ein Getriebe nachgeschaltet. Beide - die Anfahreinheit und das Getriebe - bilden dann eine Gesamt-Baueinheit. Dabei kann bei Lösungen als separat vorgefertigtes Modul die Anfahreinheit mit einem eigenen Gehäuse ausgebildet sein, wobei dies zur Bildung der Gesamt-Baueinheit aus Anfahreinheit und Getriebe an das Gehäuse des Getriebes angeflanscht wird. Diese Lösung wird vor allem für Anfahrelemente in Form von hydrodynamischen Kupplungen mit zusätzlichen Funktionen und Zuordnung weiterer Elemente gewählt. In diesem Fall ist die Anfahreinheit als Modul auch eigenständig prüfbar. Bei der Ausführung der Anfahreinheit als eigenständiges Modul ist die elektrische Maschine mit in diesem integriert. Eine andere Möglichkeit besteht darin, die Kombination aus Anfahreinheit und elektrischer Maschine in das Gehäuse des Getriebes mit zu integrieren, wobei in diesem Fall das Getriebegehäuse mit einer Gehäuseglocke ausgeführt ist, in welche das vorgefertigte Modul - dann in der Regel ohne eigenes Gehäuse ― einsetzbar ist und mit den Drehzahl-/Drehmomentwandlungseinheiten des Getriebes gekoppelt werden kann. Der Begriff Getriebe ist sehr allgemein zu verstehen und beinhaltet jegliche Art von Drehzahl-/Drehmomentwandlungseinheiten, welche einer Anfahreinheit nachgeschaltet werden und mit dieser gekoppelt sein können. Für den Einsatz im Fahrzeugbau werden die Drehzahl-/Drehmomentwandlungseinheiten des Getriebes in der Regel von mechanischen Drehzahl-/Drehmomentwandlungseinheiten gebildet. Bei diesen handelt es sich in der Regel um Nachschaltstufen, welche beispielsweise von Planetenradsätzen oder Stirnradsätzen gebildet werden können. Denkbar sind auch Ausführungen des Getriebes als stufenloses Getriebe, wobei hier in der Regel Zugmittelgetriebe zum Einsatz gelangen. Damit können auch die Möglichkeiten der stufenlosen Leistungsübertragung mit denen mit festem Übersetzungsverhältnis kombiniert werden. Die konkrete Ausgestaltung des Getriebes sowie der Kombination und konstruktiven Zusammenfassung von Anfahreinheit mit integriertem Startergenerator und Getriebe liegt dabei im Ermessen des Fachmannes und hängt vom konkreten Einsatzfall und den sich dabei ergebenden Randbedingungen ab.

In der Regel ist der hydrodynamischen Kupplung als Anfahrelement parallel eine schaltbare Kupplung zugeordnet, welche der Überbrückung dient. Diese Überbrückung wird dabei durch die drehfeste Kopplung zwischen Primärschaufelrad und Sekundärschaufelrad realisiert. Bei dieser Kopplung handelt es sich in der Regel um eine Reibungskupplung, vorzugsweise eine Lamellenkupplung.

Für die Ausgestaltung der drehfesten Kopplung zwischen dem Rotor bzw. Läufer der elektrischen Maschine mit der hydrodynamischen Kupplung ergeben sich eine Mehrzahl von Möglichkeiten. Gemäß einer ersten Ausführung ist der Rotor bzw. Läufer der elektrischen Maschine drehfest mit dem Primärschaufelrad, vorzugsweise der Primärschaufelradschale gekoppelt. Dabei kann der Rotor bzw. Läufer der elektrischen Maschine mit der Primärschaufelradschale eine bauliche Einheit bilden, wobei die Primärschaufelradschale und der Läufer entweder als integrale Baueinheit ausgeführt sind oder aber über Mittel zur drehfesten Verbindung miteinander gekoppelt werden. In beiden Fällen ist die Verbindung zwischen dem Läufer bzw. Rotor der elektrischen Maschine und dem Primärschaufelrad der hydrodynamischen Kupplung frei von Mitteln zur wahlweisen Kopplung oder Entkopplung voneinander, beispielsweise in Form von schaltbaren Kupplungen. Dies bedeutet, daß immer eine drehfeste Verbindung zwischen dem Läufer bzw. Rotor der elektrischen Maschine und dem Primärschaufelrad der hydrodynamischen Kupplung besteht. Die Verbindung zwischen der Verbindung des Rotors der elektrischen Maschine mit dem Primärschaufelrad der hydrodynamischen Kupplung und dem Antriebsaggregat kann
a) frei von Mitteln zur wahlweisen Kopplung oder Entkopplung des Antriebsaggregates von der Verbindung zwischen elektrischer Maschine und Primärschaufelrad sein oder aber
b) Mittel zur wahlweisen Kopplung oder Entkopplung der Verbindung zwischen elektrischer Maschine und Primärschaufelrad und Antriebsaggregat vorsehen.

Im erstgenannten Fall ist der Rotor der elektrischen Maschine immer in Triebverbindung mit dem Antriebsaggregat, insbesondere der Kurbelwelle bei Ausführung als Verbrennungskraftmaschine. Dies bedeutet, daß in diesem Zustand ein Starten der Verbrennungskraftmaschine möglich ist. Ferner kann die elektrische Maschine auch kurzzeitig den Verbrennungsmotor unterstützen und damit als Booster wirken. Die hydrodynamische Kupplung ist während des Startvorganges vorzugsweise entleert. Im Funktionsmodus Booster ist diese befüllt. In Analogie ist während des Startvorganges die Überbrückungskupplung vorzugsweise geöffnet.

Im Schubbetrieb erfolgt eine Leistungsübertragung vom Abtrieb, d. h. in der Regel über das Getriebe auf die Verbrennungskraftmaschine, und ein Teil der Leistung kann auch über die elektrische Maschine, welche in diesem Fall als Generator betrieben wird, in elektrische Leistung umgewandelt und dem Bordnetz zur Verfügung gestellt werden. Des weiteren erfolgt im Normalbetrieb, d. h. bei Leistungsübertragung von der Verbrennungskraftmaschine zum Abtrieb, entsprechend der Ansteuerung der elektrischen Maschine bei angekoppeltem Rotor eine Leistungsentnahme durch die elektrische Maschine, die in diesem Fall als Generator betrieben wird und die umgewandelte elektrische Leistung dem Bordnetz oder einer E-nergiespeichereinrichtung zur Verfügung stellt. Um im Schubbetrieb vollständig die über das Antriebssystem eingebrachte Leistung für die Umwandlung in elektrische Leistung zu nutzen, können die Schleppverluste durch die Verbrennungskraftmaschine durch die unter b) beschriebene Lösung minimiert werden, indem die Verbindung zwischen der elektrischen Maschine und der Antriebsmaschine unterbrochen wird. Der Leistungsanteil, der ansonsten bei ständiger Verbindung des Rotors der elektrischen Maschine mit der Verbrennungskraftmaschine im Schubbetrieb durch die innere Reibung der Verbrennungskraftmaschine aufgebraucht wird, kann in diesem Fall dann zusätzlich noch zur Umwandlung in elektrische Leistung mitgenutzt werden.

Für Lösungen mit ständiger drehfester Verbindung zwischen dem Primärschaufelrad der hydrodynamischen Kupplung und dem Rotor der elektrischen Maschine ergeben sich dabei für die elektrische Maschine bei Leistungsübertragung zwischen der Verbrennungskraftmaschine und den sich bei Überbrückung der hydrodynamischen Kupplung ergebenden mechanischen Leistungszweig die gleichen Funktionsmöglichkeiten, die Unterstützung der Verbrennungskraftmaschine und ferner im Schubbetrieb die Nutzung der über den Abtrieb eingeleiteten Energie in den Antriebsstrang zur Umwandlung in elektrische Leistung. In diesem Fall kann die hydrodynamische Kupplung befüllt bleiben oder aber entleert werden, wobei erstgenannte Möglichkeit bevorzugt zum Einsatz kommt, da hier auf längere Füllzeiten verzichtet werden kann.

Gemäß einer Weiterentwicklung sind zwischen dem Rotor der elektrischen Maschine und dem Primärschaufelrad der hydrodynamischen Kupplung Mittel zur wahlweisen Kopplung und Entkopplung, vorzugsweise in Form einer schaltbaren Kupplung, vorgesehen. Diese Möglichkeit bietet den Vorteil, daß hier keine vollständige Trennung des Antriebsstranges von der Verbrennungskraftmaschine zur Lösung der Verbindung zwischen Rotor der elektrischen Maschine und Antriebsaggregat erforderlich ist, sondern die Kopplung zwischen Antriebsaggregat und hydrodynamischer Kupplung bzw. Überbrückungskupplung bestehen bleiben kann. Allerdings ist bei Energierückgewinnung im Schubbetrieb auch hier der durch die Verbrennungskraftmaschine bedingte Leistungsanteil als Verlustleistung zu verbuchen.

Ferner besteht die Möglichkeit zur Entkoppelung des Antriebsaggregates zwischen dem Antriebsaggregat und der hydrodynamischen Kupplung eine Einrichtung zur wahlweisen Unterbrechung oder Realisierung des Leistungsflusses zwischen Antriebsaggregat und hydrodynamischer Kupplung sowie elektrischer Maschine vorzusehen.

Alle Einrichtungen zur Kopplung und Entkopplung sind vorzugsweise in Form von schaltbarer Kupplungen, insbesondere von Lamellenkupplungen ausgeführt.

Gemäß einem zweiten Lösungsansatz ist die elektrische Maschine drehfest mit dem Sekundärschaufelrad verbindbar. Diese Möglichkeit der drehfesten Verbindung kann dabei zusätzlich zur möglichen drehfesten Kopplung mit dem Primärschaufelrad gegeben sein oder aber als zweite separate Lösungsmöglichkeit. Im erstgenannten Fall ist dabei der Rotor der elektrischen Maschine drehfest mit dem Eingang der Überbrückungskupplung und dem Primärschaufelrad gekoppelt. Bei Kopplung mit dem Eingang der Überbrückungskupplung besteht trotzdem eine drehfeste Verbindung zwischen dem Rotor der elektrischen Maschine und dem Primärschaufelrad, während der Rotor durch die Überbrückungskupplung vom Sekundärschaufelrad mechanisch entkoppelt ist. Lediglich bei geschalteter Überbrückungskupplung ist der Rotor der elektrischen Maschine sowohl mit dem Primärschaufelrad als auch dem Sekundärschaufelrad drehfest verbunden. Zur Trennung des Rotors von der Antriebsmaschine ist entweder
a) eine Einrichtung zur wahlweisen Kopplung oder Entkopplung des Rotors vom Primärschaufelrad in der Verbindung zwischen Primärschaufelrad und Rotor und/oder
b) eine Einrichtung zur wahlweisen Kopplung oder Entkoppelung der drehfesten Verbindung von Rotor und Primärschaufelrad von der Antriebsmaschine
vorgesehen. Dabei kann die Variante b) auch mit a) kombiniert werden. Die Funktion der Überbrückungskupplung wird im unter a) genannten Fall dann von beiden, der dem Rotor vorgeschalteten und der diesem nachgeschalteten Kupplung übernommen.

Gemäß dem zweiten Lösungsansatz ist der Rotor lediglich mit dem Sekundärschaufelrad drehfest verbunden, wobei diese Verbindung durch eine direkte drehfeste Kopplung charakterisiert sein kann oder aber durch das Vorsehen von Mitteln zur wahlweisen Kopplung und Entkopplung des Rotors vom Sekundärschaufelrad. In beiden Fällen kann auch hier die elektrische Maschine die Funktion des Starters für das Antriebsaggregat übernehmen und zusätzlich als Booster die Antriebsmaschine zeitweilig unterstützen. Zur optimalen Energierückgewinnung kann die Entkopplung des Antriebsaggregates von der elektrischen Maschine dann beispielsweise durch Entleerung der hydrodynamischen Kupplung und gleichzeitiger Öffnung der Überbrückungskupplung erfolgen oder aber durch das Vorsehen einer weiteren Kupplung zwischen der Anfahreinheit und dem Antriebsaggregat.

Unter einem weiteren Aspekt der Erfindung sind der Anfahreinheit Mittel zur Schwingungsdämpfung zugeordnet. Diese können dabei an beliebiger Stelle im Antriebssystem zwischen Antriebsaggregat und Getriebe angeordnet bzw. dem Sekundärschaufelrad nachgeordnet sein.

Bezüglich der verwendeten elektrischen Maschinen zur Kombination der Anfahreinheit mit der Funktion eines Startergenerators bestehen keine Restriktionen. Denkbar sind alle gängigen bekannten elektrischen Maschinen, Synchronmaschinen sowie Asynchronmaschinen als auch Synchronmaschinen mit transversaler Flußführung.

Die erfindungsgemäße Lösung ist für den Einsatz in Antriebssystemen mit Schaltgetrieben, insbesondere in Automatgetrieben oder automatisierten Schaltgetrieben geeignet.

Die erfindungsgemäße Lösung wird nachfolgend anhand von Figuren erläutet. Darin ist im einzelnen folgendes dargestellt::
- Figur 1: verdeutlicht in schematisch stark vereinfachter Darstellung eine erste Ausgestaltung einer erfindungsgemäßen Anfahreinheit in einem Antriebssystem anhand eines Ausschnittes aus diesem mit drehfester Verbindung zwischen Rotor der elektrischen Maschine und Primärschaufelrad;
- Figur 2: verdeutlicht eine Weiterentwicklung einer Ausführung gemäß Figur 1 mit zusätzlicher Möglichkeit der Entkoppelung des Antriebsaggregates von der drehfesten Verbindung zwischen Rotor und Primärschaufelrad;
- Figur 3: verdeutlicht eine Weiterentwicklung einer Ausführung gemäß Figur 1 mit zusätzlicher Möglichkeit der Entkoppelung des Rotors vom Primärschaufelrad;
- Figur 4: verdeutlicht in schematisch stark vereinfachter Darstellung eine zweite Ausgestaltung einer erfindungsgemäßen Anfahreinheit in einem Antriebssystem anhand eines Ausschnittes aus diesem mit drehfester Verbindung zwischen Rotor der elektrischen Maschine und Sekundärschaufelrad;
- Figur 5: verdeutlicht eine Weiterentwicklung einer Ausführung gemäß Figur 4 mit zusätzlicher Möglichkeit der Entkoppelung des Antriebsaggregates von der drehfesten Verbindung zwischen Rotor und Sekundärschaufelrad;
- Figur 6: verdeutlicht eine Weiterentwicklung einer Ausführung gemäß Figur 4 mit zusätzlicher Möglichkeit der Entkoppelung des Rotors vom Sekundärschaufelrad;
- Figur 7: verdeutlicht in schematisch stark vereinfachter Darstellung eine erste Ausführung einer Kombination aus Kopplung des Rotors mit Primärschaufelrad und Sekundärschaufelrad;
- Figur 8: verdeutlicht in schematisch stark vereinfachter Darstellung eine zweite Ausführung einer Kombination aus Kopplung des Rotors mit Primärschaufelrad und Sekundärschaufelrad.

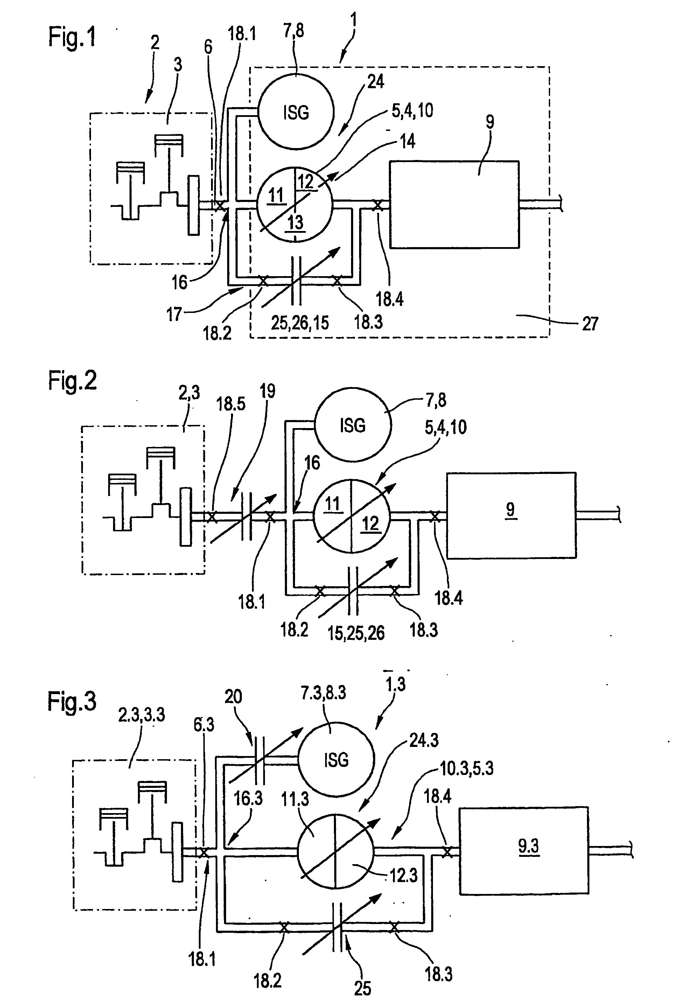

Die Figur 1 verdeutlicht in schematisch stark vereinfachter Darstellung eine erste mögliche Ausführungsform eines erfindungsgemäß gestalteten Antriebssystems 1 anhand eines Ausschnittes aus diesem. Das Antriebssystem 1 umfaßt ein Antriebsaggregat 2, welches für den Einsatz in Fahrzeugen vorzugsweise als Verbrennungskraftmaschine 3 ausgeführt ist. Mit dieser ist mindestens eine Leistungsübertragungseinheit 4 gekoppelt, wobei diese erfindungsgemäß eine Anfahreinheit 24, umfassend ein Anfahrelement 10 in Form einer hydrodynamischen Kupplung 5, umfaßt. Diese weist femer eine Überbrückungskupplung 25 in Form einer schaltbaren Kupplung 26 auf, welche parallel zum Anfahrelement 10 geschaltet ist. Ferner ist mit dem Antriebsaggregat 2, insbesondere dessen Antriebswelle 6, eine elektrische Maschine 7 gekoppelt. Bei dieser elektrischen Maschine handelt es sich um einen sogenannten Startergenerätor, unter welchem eine elektrische Maschine verstanden wird, deren Läufer bzw. Rotor 8 drehfest mit der Antriebswelle 6 zumindest wenigstens mittelbar, d. h. direkt, oder aber über weitere Übertragungselemente gekoppelt ist, und die sowohl als Generator als auch Motor betrieben werden kann. Diese elektrische Maschine 7 ersetzt damit als Grundfunktion einen Starter und einen Generator in Antriebssystem.

Das Antriebssystem 1 umfaßt gemäß Figur 1 femer wenigstens ein Getriebe 9, , welches der hydrodynamischen Kupplung 5 nachgeschaltet ist. Bei der in Figur 1 dargestellten Ausführung fungiert die hydrodynamische Kupplung 5 als Anfahrelement 10, welches, wie in Figur 1 durch unterbrochene Linie verdeutlicht, mit dem Getriebe 9 zu einer Baueinheit 27 zusammengefaßt sein kann oder aber im Getriebe 9 mit integriert ist. Die Anfahreinheit 24 und das Getriebe 9 bilden im dargestellten Fall die Baueinheit 27. Zur Verdeutlichung der einzelnen Ankopplungsmöglichkeiten für die elektrische Maschine 7 sind die hydrodynamische Kupplung 5 als Anfahrelement 10 und das Getriebe 9 getrennt dargestellt. Die beide umfassende Baueinheit 27 ist mit unterbrochener Linie dargestellt. Die hydrodynamische Kupplung 5 umfaßt ein Primärrad 11 und ein Sekundärrad 12. Die hydrodynamische Kupplung 5 ist frei von einem Leitrad. Das Primärschaufelrad 11 und das Sekundärschaufelrad 12 bilden einen torusförmigen Arbeitsraum 13 miteinander. Zur Leistungsübertragung ist die hydrodynamische Kupplung wenigstens teilbefüllt, vorzugsweise vollbefüllt. Zur Steuerung der Leistungsübertragung und insbesondere der Leistungsaufnahme ist der Füllungsgrad veränderbar. Dementsprechend ist der hydrodynamischen Kupplung 5 eine Einrichtung 14 zur Steuerung des Füllungsgrades zugeordnet, hier nur durch einen Pfeil angedeutet. Diesbezüglich bestehen gemäß dem Stand der Technik eine Vielzahl von Möglichkeiten, auf welche hier jedoch im einzelnen nicht separat eingegangen wird.

Erfindungsgemäß ist der Rotor bzw. Läufer 8 der elektrischen Maschine 7 gemäß einer ersten Lösungsvariante drehfest mit dem Primärschaufelrad 11 der hydrodynamischen Kupplung 5 gekoppelt. Diese Verbindung ist mit 16 bezeichnet. Ferner ist das Primärschaufelrad 11 wenigstens mittelbar drehfest mit der Antriebswelle 6 des Antriebsaggregates 2, gemäß Figur 1 direkt mit dieser verbunden. Die Verbindung zwischen Rotor 8 und Primärschaufelrad 11 ist mit 16 bezeichnet. Diese besteht ständig. Im dargestellten Fall ist somit der Startergenerator bzw. die elektrische Maschine 7 immer mit dem Antriebsaggregat 2 und der Leistungsübertragungseinheit 4 gekoppelt. Zur Entkopplung der elektrischen Maschine 7 vom Getriebe 9 ist eine Einrichtung 15 zur Unterbrechung des Leistungsflusses zwischen elektrischer Maschine 7 und Getriebe 9 bei Leistungsübertragung unter Umgehung der hydrodynamische Kupplung vorgesehen. Bei dieser Einrichtung handelt es sich in der Regel um eine schaltbare Kupplung. Diese Funktion wird hier von der Überbrückungskupplung 25 übernommen. Zum Starten der Antriebsmaschine 2 ist dabei die Überbrückungskupplung 25 vorzugsweise geöffnet. Die hydrodynamische Kupplung 5 kann bereits teilgefüllt sein. Aufgrund des guten Kaltstartverhaltens der hydrodynamischen Kupplung wirkt sich dies nicht negativ auf den Startvorgang aus. Ferner besteht die Möglichkeit, neben der Ausnutzung der elektrischen Maschine 7 zur aktiven Verringerung von Drehungleichförmigkeiten, auch zusätzlich eine Einrichtung zur Dämpfung von Schwingungen 17, vorzugsweise einen Torsionsschwingungsdämpfer, vorzusehen. Dieser ist im einzelnen nicht dargestellt, jedoch sind die möglichen Anordnungsmöglichkeiten 18.1 bis 18.4 durch ein Kreuz in der Figur 1 wiedergegeben. Der Torsionsschwingungsdämpfer 18.1 kann dabei gemäß einer besonders vorteilhaften Ausgestaltung zwischen dem Antriebsaggregat 2 und der Verbindung 16 der elektrischen Maschine 7 mit dem Primärschaufelrad 11 der hydrodynamischen Kupplung 5 angeordnet werden. In diesem Fall werden die Ungleichförmigkeiten des Antriebsaggregates 2 nicht in den Antriebsstrang mit übertragen. Eine weitere Möglichkeit besteht in der Anordnung zwischen der elektrischen Maschine 7 und dem Getriebe 9, wobei hier die Anordnung sowohl vor als auch nach der Überbrückungskupplung 25 erfolgen kann. Diese beiden Positionen sind mit 18.2 und 18.3 bezeichnet. Die vierte Möglichkeit, mit 18.4 bezeichnet, besteht in der Anordnung des Torsionsschwingungsdämpfers vor dem Getriebe 9, d. h. ist sowohl der Anfahreinheit 24 als auch der elektrischen Maschine 7 nachgeschaltet.

Bei der in der Figur 1 dargestellten Konfiguration ist die elektrische Maschine 7 immer drehfest mit der Verbrennungskraftmaschine 3 gekoppelt. Dies bedeutet, daß in diesem Fall die elektrische Maschine 7 bei in Betrieb genommener Verbrennungskraftmaschine 3 immer entsprechend ihrer Ansteuerung einen Leistungsanteil aufnimmt und als Generator betrieben wird. Dies erlaubt stets die Bereitstellung elektrischer Energie, beispielsweise für das Bordnetz des Fahrzeuges über die Verbrennungskraftmaschine 3. Im Schleppbetrieb, d. h. bei erfolgendem Kraftfluß von den Antriebsrädem zur Verbrennungskraftmaschine betrachtet, besteht die Möglichkeit, mittels der Überbrückungskupplung 25 bei entleerter Kupplung 5 das Getriebe 9 vom Startergenerator, d. h. von der elektrischen Maschine 7, zu entkoppeln. In diesem Fall kann jedoch auch keine elektrische Leistung aus der Schleppleistung gewonnen werden. Bei gefüllter hydrodynamischer Kupplung erfolgt der Leistungsfluss primär über die Anfahreinheit 24, insbesondere die hydrodynamische Kupplung 5 zur Verbrennungskraftmaschine 3, wobei aber auch hier lediglich der Rotor 8 mitgeschleppt und die Schleppleistung sowohl auf das Antriebsaggregat 2 und die elektrische Maschine 7 aufgeteilt wird.

Bei der in der Figur 1 dargestellten Konfiguration ist die elektrische Maschine 7 koaxial zum Anfahrelement 10, d. h. zur hydrodynamischen Kupplung 5, und damit auch dem Antriebaggregat 2, angeordnet. Dies gilt auch für die Ausführung gemäß Figur 2, welche durch das Vorsehen einer weiteren zusätzlichen Einrichtung zur Unterbrechung des Leistungsflusses zwischen der Verbindung 16 von Startergenerator 7 und Primärschaufelrad 11 der hydrodynamischen Kupplung 5 und dem Antriebsaggregat 2, vorgesehen ist. Diese Einrichtung ist mit 19 bezeichnet. Auch diese umfaßt vorzugsweise eine schaltbare Kupplung. Der Grundaufbau des Antriebssystems 1 entspricht ansonsten dem in der Figur 1 beschriebenen, weshalb für gleiche Elemente gleiche Bezugszeichen verwendet werden. Mit der zusätzlichen Möglichkeit der Unterbrechung des Leistungsflusses zwischen Antriebsaggregat 2 und der Verbindung 16 der elektrischen Maschine 7 mit dem Primärschaufelrad 11 der hydrodynamischen Kupplung 5 besteht die Möglichkeit einer vollständigen Entkopplung des Antriebsaggregates 2 vom restlichen Antriebsstrang. Damit ergibt sich zusätzlich noch eine weitere Anordnungsmöglichkeit für einen Torsionsschwingungsdämpfer, diese ist hier mit 18.5 bezeichnet. Der Torsionsschwingungsdämpfer wird dabei zwischen der Kupplung 19 und dem Antriebsaggregat 2 angeordnet. Die elektrische Maschine 7 ist somit zwischen zwei Kupplungen, der Kupplung 19 und der Überbrückungskupplung 25 angeordnet. Damit besteht die Möglichkeit, die elektrische Maschine entweder mit dem Antriebsaggregat 2 und/oder mit dem Getriebe 9 zu verbinden. Dies ermöglicht es, daß bei Ausführung des Antriebsaggregates 2 als Verbrennungskraftmaschine 3 bei warmem Motor direkt gestartet werden kann, d. h. mit geschlossener Kupplung 19. Bei tiefen , Temperaturen, wenn das Schleppmoment des Antriebsaggregates 2, insbesondere der Verbrennungskraftmaschine, sehr groß ist, sind vorzugsweise beide Kupplungen, die Kupplung 19 und die Überbrückungskupplung 25, erst geöffnet. Dabei wird zunächst der Läufer bzw. Rotor 8 der elektrischen Maschine hoch beschleunigt und erst dann die erste Kupplung 19 geschlossen. Die Antriebswelle 6 wird dann beschleunigt und das Antriebsaggregat 2, d. h. die Verbrennungskraftmaschine, startet schlagartig. Ein weiterer entscheidender Vorteil dieser Lösung, insbesondere die Möglichkeit der Entkopplung der elektrischen Maschine 7 von der Verbrennungskraftmaschine 3, besteht in einer verbesserten Bremsenergierückgewinnung, da der Anteil, der bei direkter Kopplung des Antriebstranges und der elektrischen Maschine 7 mit der Verbrennungskraftmaschine 3 an innerer Reibung durch diese vernichtet wird, durch die Möglichkeit der Entkopplung des Antriebsaggregates 2 von der elektrischen Maschine 7 dieser mit zugeführt werden kann. Im Schubbetrieb in höheren Gangstufen ist daher die Einrichtung 15 vorzugsweise immer derart betätigt, daß eine Kopplung zwischen der elektrischen Maschine 7 und der Drehzahl-/Drehmomentwandlungseinheit 9 besteht. Die hydrodynamische Kupplung 5 ist vorzugsweise entleert. Die Anfahreinheit 24 und das Getriebe sind auch hier zur Baueinheit 27 zusammengefaßt. Diese kann ferner auch die Kupplung 19 mit beinhalten. Denkbar ist jedoch auch, die Kupplung 19 als separate Einrichtung der Baueinheit 27 vorzuschalten.

Bezüglich der Art der Kombination von Anfahreinheit 24 und Getriebe 9 bestehen keine Beschränkungen, d.h. Integration der Anfahreinheit 24 in das Getriebe 9, insbesondere einen Teil der Gehäuseglocke des Getriebes 9 oder Anflanschen an das Gehäuse. In beiden Fällen entsteht eine Gesamtbaueinheit 27.

In beiden Ausführungen gemäß Figur 1 und 2 kann die elektrische Maschine 7 als Booster auch zusätzlich zur Unterstützung des Antriebsaggregates 2 bei der Leistungsbereitstellung durch Einspeisung von Leistung in das Antriebssystem 1 genutzt werden.

Die Figur 3 verdeutlicht eine weitere Modifikation eines erfindungsgemäß gestalteten Antriebssystems 1 gemäß Figur 1. Hier ist der Rotor 8.3 der elektrischen Maschine 7.3 nicht fortlaufend, d.h. nicht ständig, drehfest mit dem Primärschaufelrad 11.3 gekoppelt. Die Verbindung 16.3 ist somit wahlweise lösbar. Dazu ist eine Einrichtung 20 zur wahlweisen Kopplung oder Entkopplung des Rotors vom Primärschaufelrad 11.3 vorgesehen. Diese ist vorzugsweise ebenfalls in Form einer schaltbaren Kupplung ausgeführt. Die Funktion und der übrige Aufbau des Antriebssystems 1.3 gestalten sich analog wie in der Figur 1 beschrieben, wobei jedoch zusätzlich der Leistungsfluß zwischen Antriebsaggregat 2.3 und elektrischer Maschine 7.3, unabhängig von der Leistungsübertragung zwischen Antriebsaggregat 2.3 und Anfahrelement 10.3 bzw. Überbrückungskupplung 25 und Getriebe unterbrochen werden kann, d. h. über die elektrische Maschine 7.3 entsprechend der Ansteuerung der Einrichtung 20 nur zeitweise elektrische Leistung zur Verfügung gestellt wird. Die Anordnungsmöglichkeiten bei Integration eines Torsionsschwingungsdämpfers entsprechen denen in Figur 1 beschriebenen und sind mit 18.1, 18.2, 18.3 und 18.4 bezeichnet.

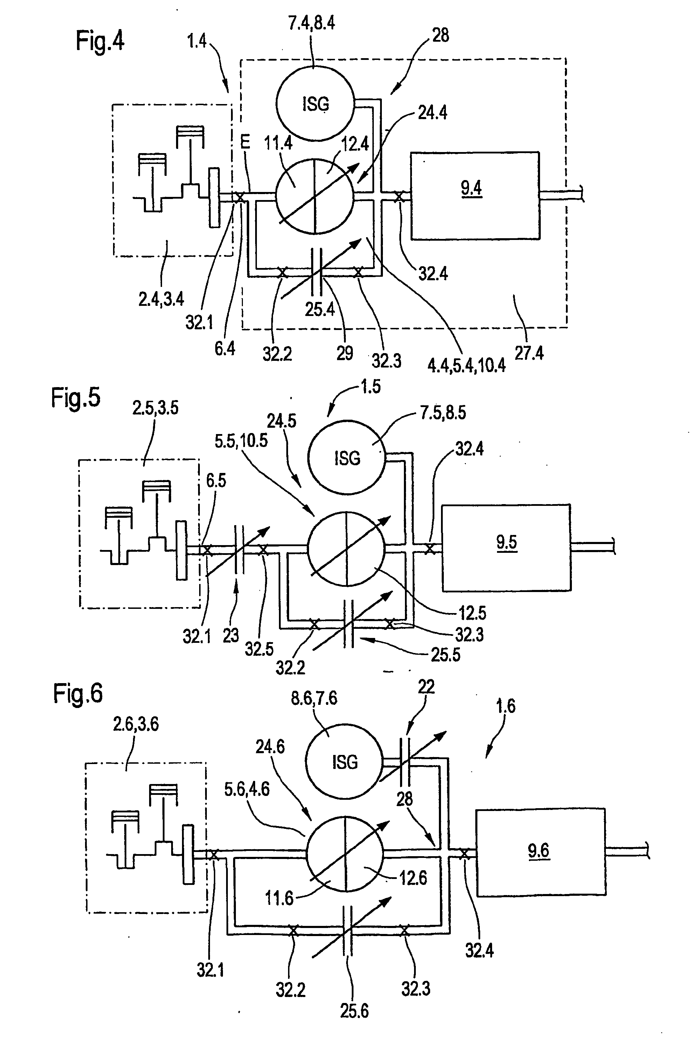

Die Figur 4 verdeutlicht eine weitere alternative Ausführung. Das Antriebssystem 1.4 umfaßt ebenfalls ein Antriebsaggregat 2.4 in Form einer Verbrennungskraftmaschine 3.4, die mit einer Leistungsübertragungseinheit 4.4, umfassend eine Anfahreinheit 24.4, mit einem Anfahrelement in Form einer hydrodynamischen Kupplung 5.4 gekoppelt ist. Die hydrodynamische Kupplung 5.4 ist dabei integraler Bestandteil einer Baueinheit 27.4, umfassend ein Getriebe 9.4, kann jedoch dem Getriebe 9.4 bei Funktion als Anfahreinheit 10.4 und Ausführung als separate Einheit vorgeschaltet und lediglich an das Gehäuse des Getriebes 9.4 angeflanscht sein. In der Figur 4 sind zur Verdeutlichung der Anbindungsmöglichkeiten die hydrodynamische Kupplung 5.4 und das Getriebe 9.4 räumlich getrennt dargestellt. Auch hier ist die elektrische Maschine 7.4 koaxial zur hydrodynamischen Kupplung 5.4 und damit bei Kopplung dieser mit der Verbrennungskraftmaschine 3.4 zu dieser angeordnet. Das Primärrad 11.4 der hydrodynamischen Kupplung 5.4 ist drehfest mit der Antriebswelle 6.4 des Antriebsaggregates 2.4 gekoppelt. Das Sekundärrad 12.4 ist drehfest mit der Drehzahl-/Drehmomentwandlungseinheit verbunden. Bei Integration der hydrodynamischen Kupplung 5.4 in die Baueinheit 27.4 bildet dabei das Primärschaufelrad 11.4 bzw. das mit diesem drehfest gekoppelte Element die Getriebeeingangswelle E der Baueinheit 27.4. Die elektrische Maschine 7.4, insbesondere der Läufer bzw. Rotor 8.4, ist dabei drehfest mit dem Sekundärrad 12.4 gekoppelt und damit auch dem Getriebe 9.4. Die Anfahreinheit 24.4 umfaßt auch hier eine Überbrückungskupplung 25.4, die parallel zur hydrodynamischen Kupplung 5.4 geschaltet ist. Die Anbindung der elektrischen Maschine 7.4 erfolgt hier zwischen der Anfahreinheit 24.4 und dem Getriebe 9.4. Der Rotor 8.4 der elektrischen Maschine 7.4 ist dabei immer drehfest mit dem Sekundärschaufelrad 12.4 und dem Ausgang 29 der Überbrückungskupplung 25.4 gekoppelt. Eine Kopplung des Rotors 8.4 mit dem Antriebsaggregat 2.4 ist daher nur bei befüllter hydrodynamischer Kupplung 5.4, wie beispielsweise während des Startvorganges, oder bei geschlossener Überbrückungskupplung 25 möglich. Zum Zwecke der optimalen Energierückgewinnung im Schubbetrieb ist die hydrodynamische Kupplung 5.4 vorzugsweise vollständig, zumindest jedoch teilweise entleert und die Überbrückungskupplung 25.4 geöffnet. Dadurch kann eine vollständige Entkopplung der Verbrennungskraftmaschine 3.4 von den übrigen leistungs-übertragenden Einheiten, insbesondere dem Getriebe 9.4 und der Gesamtbaueinheit 27.4, realisiert werden. Die gesamte über das Getriebe 9.4 in Richtung des Antriebsaggregates 2.4 eingeleitete Leistung kann somit der elektrischen Maschine 7.4 zugeführt und in elektrische Leistung umgewandelt werden.

Bei entleerter hydrodynamischer Kupplung 5.4 erfolgt nur noch eine Leistungsübertragung vom Antriebsaggregat 2.4 zum Getriebe 9.4 unter Umgehung der hydrodynamischen Kupplung 5.4, wobei aufgrund der drehfesten Kopplung 28 des Läufers bzw. Rotors 8.4 der elektrischen Maschine 7.4 mit dem Sekundärschaufelrad 12.4 ein Leistungsanteil, der mittels des Antriebsaggregates 2.4 zur Verfügung gestellten Gesamtleistung zur Erzeugung von elektrischer Leistung für das Bordnetz abgezweigt werden kann. Ist bei der Ausführung gemäß Figur 4 zum Zwecke der Rückgewinnung immer noch eine Entleerung der hydrodynamischen Kupplung 5.4 erforderlich, wobei jedoch Ventilationsverluste aufgrund des Mitschleppens des Sekundärschaufelrades 12.4 zu verzeichnen sind, kann durch Vorsehen einer weiteren Einrichtung 23 zur wahlweisen Unterbrechung des Leistungsflusses zwischen dem Antriebsaggregat 2.5 und der hydrodynamischen Kupplung 5.5 eine vollständige Entkopplung des Antriebsaggregates 2.5 ermöglicht werden. In diesem Fall kann auch bei befüllter hydrodynamischer Kupplung 5.5, wie in der Figur 5 dargestellt, durch die Überbrückung, d. h. Gleichschaltung zwischen dem Primärschaufelrad 11.5 und dem Sekundärschaufelrad 12.5, die gesamte in den Antriebsstrang von den Rädern eingeleitete Leistung der elektrischen Maschine 7.5 zur Erzeugung elektrischer Leistung zugeführt werden.

Auch für die beiden in den Figuren 4 und 5 dargestellten Lösungen ergeben sich unterschiedliche Anordnungsmöglichkeiten eines Torsionsschwingungsdämpfers. Diese sind hier mit 32.1 bis 32.4 für die Figur 4 und 32.1 bis 32.5 für die Figur 5 dargestellt. Die Position 32.1 des Torsionsschwingungsdämpfers ist durch die Anordnung zwischen der Antriebswelle 6.4 bzw. 6.5 und der hydrodynamischen Kupplung 5.4 bzw. 5.5 vor der Überbrückungskupplung realisiert. Dabei kann die Anordnung direkt unmittelbar hinter oder an der Antriebswelle 6.4 bzw. 6. erfolgen, jedoch auch vor der Überbrückungskupplung 25.4 bzw. 25.5. Die Anordnung 32.2 erfolgt direkt vor der Überbrückungskupplung. Ferner kann gemäß 32.3 der Torsionsschwingungsdämpfer hinter der Überbrückungskupplung 25.4 bzw. 25.5 vor der elektrischen Maschine 7.4 bzw. 7.5 und gemäß 32.4 hinter der Überbrückungskupplung 25.4 bzw. 25.5 und nach der elektrischen Maschine 7.4 bzw. 7.5 angeordnet werden. Die Position 24.5 in Figur 4 verdeutlicht eine zusätzliche Anordnung hinter der Einrichtung 23 in Form einer schaltbaren Kupplung und vor der Überbrückungskupplung 25.5.

Bei der in der Figur 5 dargestellten Lösung kann die Einrichtung 23 als Trennkupplung Bestandteil der Anfahreinheit 24.5 und eventuell der aus Anfahreinheit 24.5 und Getriebe 9.5 gebildeten Baueinheit 27.5 sein. Denkbar ist jedoch auch die konstruktive Trennung von Einrichtung 23 und Baueinheit 27.5. In diesem Fall ist die Einrichtung vor der Baueinheit 27.5 angeordnet. Dies gilt in Analogie auch für die Torsionsschwingungsdämpfer 32.1 in Figuren 4 und 5 und 32.2 in Figur 5.

Die Figur 6 verdeutlicht eine Modifikation einer Ausführung gemäß Figur 4. Der Grundaufbau entspricht dem in Figur 4, weshalb für gleiche Elemente die gleichen Bezugszeichen verwendet werden. Zusätzlich ist hier eine Einrichtung 22 zur wahlweisen Kopplung oder Entkopplung des Rotors 8.6 der elektrischen Maschine 7.6 vom Sekundärschaufelrad 12.6 vorgesehen. Diese ist vorzugsweise in Form einer schaltbaren Kupplung ausgeführt und in der Verbindung 28 zwischen elektrischer Maschine 7.6 und Sekundärschaufelrad 12.6 angeordnet. Die Funktionsweise entspricht im wesentlichen der in der Figur 4 beschriebenen, wobei durch die vollständige Entkopplung der elektrischen Maschine 7.6 vom Antriebsstrang und damit dem Antriebsaggregat 2.6 sowie der hydrodynamischen Kupplung 5.6 diese zeitweise außer Funktion genommen wird. Die Anordnungsmöglichkeiten für den Torsionsschwingungsdämpfer 32.1 bis 32.4 entsprechen denen in Figur 4.

Auch bei Kopplung des Rotors 8.4, 8.5 und 8.6 mit dem Sekundärschaufelrad 12,4, 12.5 bzw. 12.6 besteht die Möglichkeit der Ausnutzung der elektrischen Maschine 7.4, 7.5 oder 7.6 als Booster, d. h., zur zusätzlichen Energiebereitstellung für den Antriebsstrang, wobei in diesem Fall bei einer Ausführung gemäß Figur 6 die Kupplung 22 geschlossen sein muss. Ferner kann die elektrische Maschine 7.4, 7.5 oder 7.6 zum Starten des Antriebsaggregates 2.4, 2.5 bzw. 2.6 herangezogen werden. Im Schubbetrieb sind bei bestehender Kopplung des Rotors 8.4, 8.5 bzw. 8.6 mit dem Sekundärschaufelrad 12.4, 12.5 bzw. 12.6 bzw. dem Getriebe 9.4, 9.5 bzw. 9.6 Leistungseinspeisungen in das Bordnetz oder eine Energiespeichereinrichtung möglich.

Auf die separate Darstellung der Baueinheit 27 entsprechend Figur 4 wurde aus Übersichtlichkeitsgründen in Figur 5 und 6 verzichtet.

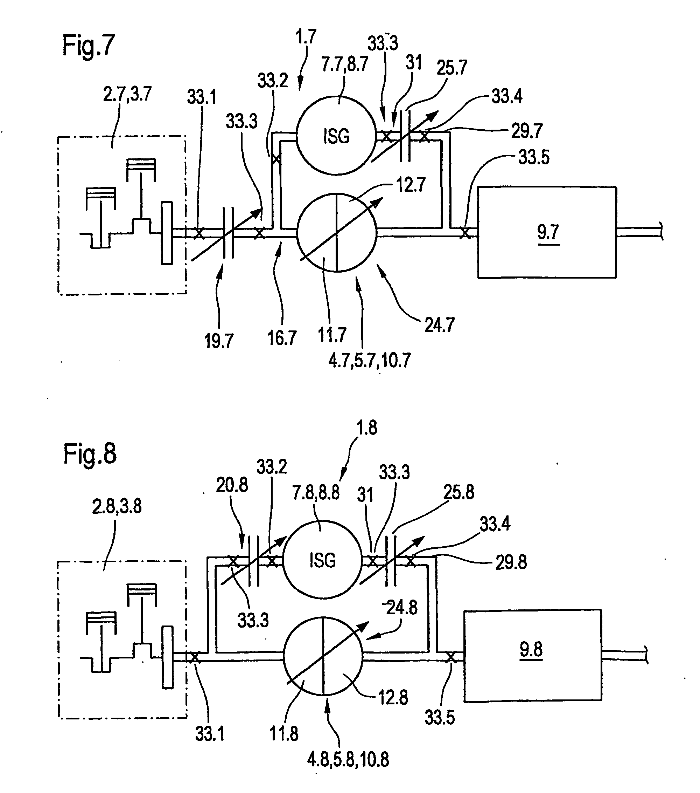

Die Figuren 7 und 8 verdeutlichen eine weitere dritte Möglichkeit der Anbindung der elektrischen Maschine 7 an die Anfahreinheit 24. Der Grundaufbau des Antriebssystems mit Antriebsaggregat 2, Anfahreinheit 24 und nachgeordnetem Getriebe 9 und dem Vorsehen einer Überbrückungskupplung 25, welche parallel zur hydrodynamischen Kupplung 5 geschaltet ist, entspricht dem in den Figuren 1 bis 6 beschriebenen. In diesen Ausführungen gemäß Figur 7 und Figur 8 ist jedoch die elektrische Maschine 7 im parallelen Leistungszweig 30, in welchem die Überbrückungskupplung 25 angeordnet ist, angeordnet. Der Rotor 8.7 der elektrischen Maschine 7.7 ist gemäß Figur 7 mit dem Primärschaufelrad 11.7 direkt, d.h. fortwährend, drehfest verbunden, wobei die Verbindung mit 16.7 bezeichnet ist. Ferner ist der Rotor 8.7 drehfest mit dem Eingang 31 der Überbrückungskupplung 25.7 gekoppelt. Der Ausgang 29.7 der Überbrückungskupplung 25.7 ist mit dem Sekundärschaufelrad 12.7 der hydrodynamischen Kupplung 5.7 verbunden. Zur Trennung der elektrischen Maschine 7.7 vom Antriebsaggregat 2.7 ist eine Einrichtung 19.7 zur wahlweisen Kopplung oder Entkopplung der Verbindung 16.7 mit dem Antriebsaggregat 2.7, welche beispielsweise in Form einer schaltbaren Kupplung ausgeführt ist, vorgesehen. Diese Lösung ermöglicht bei geöffneter Kupplung 19.7 im Schubbetrieb, unabhängig von der Leistungsübertragung über die hydrodynamische Kupplung 5.7 oder über die Überbrückungskupplung 25.7 eine vollständige Entkopplung des Antriebsaggregates 2.7 vom Antriebsstrang, so daß die der elektrischen Maschine 7.7 im Schubbetrieb zugeführte Leistung nicht durch die Schleppverluste der Antriebsmaschine 2.7 minimiert wird. Bei der Ausführung gemäß Figur 8 ist eine Einrichtung 20.8 zur wahlweisen Koppelung oder Entkoppelung des Rotors 8.8 vom Primärschaufelrad 11.8 in der Verbindung 16.8 integriert, so daß zwar auch hier eine vollständige Entkopplung des Antriebsaggregates 2.8 während des Schubbetriebes bei Leistungsübertragung lediglich über den durch die Überbrückungskupplung 25.8 beschriebenen Leistungszweig erfolgt, jedoch bei gefüllter hydrodynamischer Kupplung die Verbrennungskraftmaschine 3.8 im Schubbetrieb über diese mitgeschleppt wird.

Die Lösungen gemäß der Figuren 7 und 8 sind durch die Verbindung des Rotors 8.7 bzw. 8.8 sowohl mit dem Primärschaufelrad 11.7, 11.8 als auch dem Eingang 31 der Überbrückungskupplung charakterisiert, wobei gemäß Figur 7 immer eine drehfeste Kopplung 16.7 des Rotors 8.7 mit dem Primärschaufelrad 11.7 existiert, während diese gemäß Figur 8 wahlweise, d.h. zeitweise, gelöst werden kann. Bei beiden Lösungen sind bei Nutzung der elektrischen Maschine 7.7 bzw. 7.8 als Starter die Einrichtungen 20.8 bzw. 19.7 geschlossen, die hydrodynamische Kupplung vorzugsweise vollständig, wenigstens jedoch teilweise entleert und die Überbrückungskupplung 25.7, 25.8 geöffnet. Als Booster ist dann die Kupplung 5.7, 5.8 befüllt oder die Überbrückungskupplung 25.7, 25.8 geschlossen. Zur Energierückgewinnung im Bremsbetrieb bzw. Schubbetrieb ist die Verbindung zwischen Rotor 8.7 bzw. 8.8 und Antriebsaggregat gekappt, d. h. die Einrichtungen 19.7 und 20.8 sind geöffnet. Für die Anordnung von Schwingungsdämpfem ergeben sich folgende Möglichkeiten, welche für Figur 7 mit 33.1 bis 33.6 und Figur 8 mit 33.1 bis 33.5 bezeichnet sind. Dabei erfolgt die Anordnung der Torsionsschwingungsdämpfer 33.3 jeweils zwischen Rotor 8.7 und 8.8 und dem Eingang 31 der Überbrückungskupplung 25.7 bis 25.8. Die Anordnung der Torsionsschwingungsdämpfer 33.4 erfolgt zwischen Überbrückungskupplung 25.7, 25.8 und der Kopplung mit dem Sekundärschaufelrad 12.7, 12.8, die Anordnung der Torsionsschwingungsdämpfer 33.5 erfolgt zwischen der Verbindung des Ausganges 29.7 bzw. 29.8 der Überbrückungskupplung 25.7 bzw. 25.8 und dem Sekundärschaufelrad 12.7 bzw. 12.8 mit dem Getriebe 9.7 bzw. 9.8.

Die Torsionsschwingungsdämpfer 33.1 sind dem Antriebsaggregat 2.7 bzw. 2.8 nachgeordnet und in der Verbindung dieses mit der Verbindung 16.7 bzw. 16.8 zwischen Rotor 8.7 bzw. 8.8 und dem Primärschaufelrad 11.7 bzw. 11.8 angeordnet. 33.2 ist vor dem Rotor 8.7 bzw. 8.8 in der Verbindung 16.7 bzw. 16.8 angeordnet. 33.3 in Figur 7 entspricht einer Anordnung vor der Verbindung 16.7, jedoch nach der Einrichtung 19.7, während 33.3 in Figur 8 für eine Anordnung in der Verbindung 16.8 vor der Einrichtung 20.8 entspricht. Bezugszeichenliste
- 1;1.3;1.4;1.5;1.6;1.7;1.8: Antriebssystem
- 2; 2.3;2.4;2.5;2.6;2.7;2.8: Antriebsaggregat
- 3; 3.3;3.4;3.5;3.6;3.7;3.8: Verbrennungskraftmaschine
- 4;4.3;4.4;4.5;4.6;4.7;4.8: Leistungsübertragungseinheit
- 5;5.3;5.4;5.5;5.6;5.7;5.8: hydrodynamische Kupplung
- 6;6.3;6.4;6.5;6.6;6.7;6.8: Antriebswelle
- 7;7.3;7.4.7.5.7.6.7;7;7.8: elektrische Maschine
- 8,8.3;8.4;8.5;8.6;8.7;8.8: Läufer, Rotor der elektrischen Maschine
- 9;9.3;9.4;9.5;9.6;9.7;9.8: Drehzahl/Drehmomentübertragungseinheit
- 10;10.3;10.4;10.5;10.6;10.7;10.8: Anfahrelement
- 11;11.3;11.4;11.5;11.6;11.7;11.8: Primärschaufelrad
- 12; 12.3: Sekundärschaufelrad
- 13;13.3: torusförmiger Arbeitsraum
- 14: Einrichtung zur Steuerung des Füllungsgrades
- 15: Einrichtung zur wahlweisen Unterbrechung oder Realisierung des Leistungsflusses zwischen der elektrischen Maschine und der Getriebebaueinheit
- 16: Verbindung zwischen dem Rotor der elektrischen Maschine und dem Primärschaufelrad der hydrodynamischen Kupplung Einrichtung zur Dämpfung von Schwingungen
- 18.1;18.2;18.3;18.4;18.5: Torsioilschwingungsdämpfer
- 19;19.7: Einrichtung zur wahlweisen Kopplung oder Entkopplung der Verbindung 16 vom Antriebsaggregat
- 20,20.8: Einrichtung zur wahlweisen Kopplung oder Entkopplung des Rotors vom Primärschaufelrad
- 21: Einrichtung zur wahlweisen Kopplung oder Entkopplung
- 22: Einrichtung zur wahlweisen Kopplung oder Entkopplung des Rotors der elektrischen Maschine vom Sekundärschaufelrad
- 23: Einrichtung zur wahlweisen Unterbrechung oder Realisierung des Leistungsflusses zwischen Antriebsaggregat und hydrodynamischer Kupplung sowie elektrischer Maschine
- 24: Anfahreinheit
- 25: Überbrückungskupplung
- 26: schaltbare Kupplung
- 27; 27.4: Getriebebaueinheit
- 28: Verbindung elektrische Maschine und Sekundärschaufelrad
- 29, 29.7, 29.8: Ausgang der Überbrückungskupplung
- 30: Leistungszweig
- 31: Eingang der Überbrückungskupplung
- 32.1;32,2;32,3;32.4;32.5: Torsionsschwingungsdämpfer
- 33.1;33.2;33.3;33.4;33.5; 33.6: Torsionsschwingungsdämpfer

## Patentansprüche

1. Antriebssystem, insbesondere für Kraftfahrzeuge, mit folgenden Merkmales:
1.1 einem Antriebsaggregat (2;2.3;2.4;2.5;2.6;2.7;2.8) und wenigstens einer, mit dem Antriebsaggregat (2;2.3;2.4;2.5;2.6;2.7;2.8) gekoppelten Leistungsübertragungseinheit (4;4.3;4.4;4.5;4.6;4.7;4.8);
1.2 einer, mit dem Antriebsaggregat (2;2.3;2.4;2.5;2.6;2.7;2.8) wenigstens mittelbar gekoppelten elektrischen Maschine (7.;7.3;7.4;7.5;7.6;7.7;7.8);
1.3 die Leistungsübertragungseinheit (4;4.3;4.4;4.5;4.6;4.7;4.8) umfaßt wenigstens ein Anfahrelement (10; 10.3; 10.4; 10.5;10.6; 10.7; 10.8) in Form einer hydrodynamischen Kupplung (5.;5.3;5.4;5.5;5.6;5.7;5.8) und eine Überbrückungskupplung (25.;25.3;25.4;25.5;25.6;25.7;25.8);
1.4 der Rotor (8.;8.3;8.4;8.5;8.6;8.7;8.8) bzw. Läufer der elektrischen Maschine (7.;7.3;7.4;7.5;7.6;7.7;7.8) ist koaxial zur hydrodynamischen Kupplung
1.5 die hydrodynamische Kupplung (5.;5.3;5.4;5.5;5.6;5.7;5.8) ist steuerbar; und (5.;5.3;5.4;5.5;5.6;5.7;5.8) angeordnet und mit dieser drehfest koppelbar;
1.6 die hydrodynamische Kupplung (5.;5.3; 5.7;5.8) umfaßt ein Primärschaufelrad (11;11.3;11.7;11.8) und ein Sekundärschaufelrad (12.;12.3;12.7;12.8) und ist frei von einem Leitrad;.
1.7 der Rotor bzw. Läufer (8.;8.3;8.7;8.8) der elektrischen Maschine (7.;7.3;7.7;7.8) ist drehfest mit dem Primärschaufelrad (11; 11.3; 11.7; 11.8) oder einer mit dieser drehfest gekoppelten und das Sekundärschaufelrad (12; 12.3; 12.7; 12.8) in axialer und teilweise in radialer Richtung umschließenden Primärschaufelradschale verbindbar.

2. Antriebssystem nach Anspruch 1, **dadurch gekennzeichnet, daß** Primärschaufelrad (11;11.3;11.7;11.8) oder Primärschaufelradschale und der Rotor (8; 8.3; 8.7; 8.8) der elektrischen Maschine (7; 7.3; 7.7; 7.8) eine bauliche Einheit bilden.

3. Antriebssystem nach Anspruch 2, **dadurch gekennzeichnet, daß** das Primärschaufelrad (11; 11.3; 11.7; 11.8) oder die Primärschaufelradschale und der Rotor (8; 8.3; 8.7; 8.8) der elektrischen Maschine (7; 7.3; 7.7; 7.8) als integrale Baueinheit ausgeführt sind.

4. Antriebssystem nach einem der Ansprüche 1 bis 3, **dadurch gekennzeichnet, daß** eine Einrichtung zur wahlweisen Kopplung oder Entkopplung des Rotors (8.;8.3; 8.7;7;8.8) der elektrischen Maschine (7.;7.3;7.7;7.8) von einem, der hydrodynamischen Kupplung (5.;5.3; 5.7;5.8) nachgeschalteten Getriebe (9; 9.3; 9.7; 9.8) vorgesehen ist.

5. Antriebssystem nach Anspruch 4, **dadurch gekennzeichnet, daß** die Einrichtung von einer schaltbaren Kupplung gebildet wird.

6. Antriebssystem nach einem der Ansprüche 4 oder 5, **dadurch gekennzeichnet, daß** der Rotor (8) der elektrischen Maschine (7) drehfest mit der Antriebswelle (6) des Antriebsaggregates (2) verbunden ist.

7. Antriebssystem nach einem der Ansprüche 4 oder 5, **dadurch gekennzeichnet, daß** wenigstens eine Einrichtung (19; 19.7; 20; 20.8) zur wahlweisen Kopplung oder Entkopplung des Rotors (8.3;8.7;8.8) der elektrischen Maschine (7.3;7.7;7.8) vom Antriebsaggregat (2.3,2.7;2.8) vorgesehen ist

8. Antriebssystem nach Anspruch 7, **dadurch gekennzeichnet, daß** die Einrichtung (20; 20.8) in der Verbindung (16; 16.8) zwischen dem Rotor (8.3; 8.8) und dem Primärschaufelrad (11.3;11.8) bzw. der Primärschaufelradschale der hydrodynamischen Kupplung (5.3; 5.8) angeordnet ist.

9. Antriebssystem nach Anspruch 7, **dadurch gekennzeichnet, daß** die Einrichtung (19; 19.7) zwischen dem Antriebsaggregat (2; 2.7) und der Verbindung (16; 16.7) zwischen dem Rotor (8; 8.7) und der hydrodynamischen Kupplung (5; 5.7) angeordnet ist.

10. Antriebssystem nach einem der Ansprüche 7 bis 9, **dadurch gekennzeichnet, daß** die Einrichtung (19; 19.7; 20; 20.8) als schaltbare Kupplung ausgeführt ist

11. Antriebssystem, insbesondere für Kraftfahrzeuge, mit folgenden Merkmalen:
11.1 einem Antriebsaggregat (2;2.3;2.4;2.5;2.6;2.7;2.8) und wenigstens einer, mit dem Antriebsaggregat (2;2.3;2.4;2.5;2.6;2.7;2.8) gekoppelten Leistungsübertragungseinheit (4;4.3;4.4;4.5;4.6;4.7;4.8);
11.2 einer, mit dem Antriebsaggregat (2;2.3;2.4;2.5;2.6;2.7;2.8) wenigstens mittelbar gekoppelten elektrischen Maschine (7.;7.3;7:4;7.5;7.6;7.7;7.8);
11.3 die Leistungsübertragungseinheit (4;4.3;4.4;4.5;4.6;4.7;4.8) umfaßt wenigstens ein Anfahrelement (10; 10.3; 10.4; 10.5; 10.6; 10.7; 10.8) in Form einer hydrodynamischen Kupplung (5.;5.3;5.4;5.5;5.6;5.7;5.8) und eine Überbrückungskupplung (25.;25.3;25.4;25.5;25.6;25.7;25.8);
11.4 der Rotor (8.;8.3;8.4;8.5;8.6;8.7;8.8) bzw. Läufer der elektrischen Maschine (7.;7.3;7.4;7.5;7.6;7.7;7.8) ist koaxial zur hydrodynamischen Kupplung
11.5 die hydrodynamische (5.;5.3;5.4;5.5;5.6;5.7;5.8) ist steuerbar; und (5.;5.3;5.4;5.5;5.6;5.7;5.8) angeordnet und mit dieser drehfest koppelbar;
11.6 die hydrodynamische Kupplung (5.4;5.5;5.6;5.7;5.8) umfaßt ein Primärschaufelrad (11.4; 11.5;11.7;11.8) und ein Sekundärschaufelrad (12.4; 12.5;12.6;12.7;12.8) und ist frei von einem Leitrad;
11.7 der Läufer der elektrischen Maschine (7.4;7.5;7.6,7.7;7.8) ist mit dem Sekundärschaufelrad (12.4; 12.5;12.6;12.7;12.8) drehfest verbindbar.

12. Antriebssystem nach Anspruch 11, **dadurch gekennzeichnet, daß** das Sekundärschaufelrad (12.4;12.5; 12.6;12.7;12.8) und der Rotor (8.4; 8.5; 8.6; 8.7; 8.8) der elektrischen Maschine (7.4;7.5;7.6,7.7;7.8) eine bauliche Einheit bilden.

13. Antriebssystem nach Anspruch 12, **dadurch gekennzeichnet, daß** das Sekundärschaufelrad (12.4;12.5; 12.6;12.7;12.8) und der Rotor (8.4; 8.5; 8.6; 8.7; 8.8) als integrale Baueinheit ausgeführt sind.

14. Antriebssystem nach einem der Ansprüche 11 bis 13, **dadurch gekennzeichnet, daß** eine Einrichtung (22; 23; 19.7; 20.8; 25; 25.4; 25.5; 25.6) zur Unterbrechung des Leistungsflusses zwischen der Verbrennungskraftmaschine (2.4; 2.5; 2.6; 2.7; 2.8) und dem Rotor (8.4; 8.5; 8.6; 8.7; 8.8) wenigstens bei Leistungsübertragung über die Überbrückungskupplung (25; 25.4; 25.5; 25.6) vorgesehen ist.

15. Antriebssystem nach Anspruch 14, **dadurch gekennzeichnet, daß** eine Einrichtung (22; 23; 19.7;20.8; 25) zur Unterbrechung des Leistungsflusses zwischen der Verbrennungskraftmaschine (2.5; 2.6; 2.7) und dem Rotor (8.5; 8.6; 8.7) wenigstens bei Leistungsübertragung über die hydrodynamische Kupplung (5.5; 5.6; 5.7) vorgesehen ist.

16. Antriebssystem nach Anspruch 14, **dadurch gekennzeichnet, daß** die Einrichtung von der Überbrückungskupplung (25.4;25,5;25.6) gebildet wird.

17. Antriebssystem nach einem der Ansprüche 14 bis 16, **dadurch gekennzeichnet, daß** die Einrichtung von einer Einrichtung (23; 19.7) zur wahlweisen Realisierung oder Unterbrechung der Leistungsübertragung zwischen dem Antriebsaggregat (2.5; 2.7) und der Verbindung (16.5; 16.7) zwischen Primärschaufelrad (11.5; 11.7) und dem Rotor (8.5; 8.7) gebildet wird.

18. Antriebssystem nach einem der Ansprüche 14 bis 16, **dadurch gekennzeichnet, daß** die Einrichtung von einer Einrichtung (22) zur wahlweisen Koppelung oder Entkoppelung des Rotors (8.6) vom Sekundärschaufelrad (12.6) gebildet wird.

19. Antriebssystem nach einem der Ansprüche 14 bis 16, **dadurch gekennzeichnet, daß** die Einrichtung von einer Einrichtung (20.8) zur wahlweisen Koppelung oder Entkoppelung des Rotors (8.8) vom Primärschaufelrad (11.6) gebildet wird.

20. Antriebssystem nach einem der Ansprüche 1 bis 19, **dadurch gekennzeichnet, daß** die hydrodynamische Kupplung (5.;5.3;5.4;5.5;5.6;5.7;5.8) wenigstens mit Teilbefütlung betreibbar ist.

21. Antriebssystem nach einem der Ansprüche 1 bis 20, **dadurch gekennzeichnet, daß** eine Einrichtung zur Beeinflussung des Füllungsgrades der hydrodynamischen Kupplung (5.;5.3;5.4;5.5;5.6;5.7;5.8) vorgesehen ist.

22. Antriebssystem nach einem der Ansprüche 1 bis 21,
**dadurch gekennzeichnet, daß** eine Vorrichtung zur Dämpfung von Schwingungen (18.1; 18.2; 18.3; 18.4; 18.5; 32.1; 32.2; 32.3; 32.4; 32.5; 33.1; 33.2; 33.3; 33.4; 33.5; 33.6) vorgesehen ist, welche gemäß wenigstens einer der nachfolgend genannten Anordnungsmöglichkeiten angeordnet sein kann:
a) zwischen dem Antriebsaggregat (2; 2.3; 2.7; 2.8) und der Verbindung zwischen Primärschaufelrad (11; 11.3; 11.7; 11.8) und Rotor (8; 8.3; 8.7; 8.8);
b) zwischen Rotor (.8.7; 8.8) und Primärschaufelrad (11.7; 11.8);
c) zwischen Rotor (8.7; 8.8) und Sekundärschaufelrad (12.7; 12.8);
d) vor der Überbrückungskupplung (25; 25.4; 25.5; 25.6; 25.7; 25.8) oder nach der Überbrückungskupplung (25; 25.4; 25.5; 25.6; 25.7; 25.8);
e) hinter der Koppelung zwischen Sekundärschaufelrad (12.4; 12.5; 12.6; 12.7; 12.8) und Rotor (8.4; 8.5; 8.6; 8.7; 8.8)
f) hinter der Kopplung zwischen Sekundärschaufelrad (12.7; 12.8) und Überbrückungskupplung (25.7; 25.8).

23. Antriebssystem nach Anspruch 22, **dadurch gekennzeichnet, daß** die Vorrichtung zur Dämpfung von Schwingungen ein hydraulischer Torsionsschwingungsdämpfer ist.

24. Antriebssystem nach einem der Ansprüche 1 bis 23, **dadurch gekennzeichnet, daß** die hydrodynamische Kupplung (5; 5.3; 5.4; 5.5; 5.6; 5.7; 5.8) als Anfahrelement (10; 10.3; 10.4; 10.5; 10.6; 10.7; 10.8) Bestandteil einer Anfahreinheit (24) ist, welcher ein Getriebe (9; 9.3; 9.4; 9.5; 9.6; 9.7; 9.8) nachgeschaltet ist

25. Antriebssystem nach Anspruch 24, **dadurch gekennzeichnet, daß** die Anfahreinheit (24) ein eigenes Gehäuse aufweist, welches an das Gehäuse des Getriebes (9; 9.3; 9.4; 9.5; 9.6; 9.7; 9.8) angeflanscht ist und Anfahreinheit und Getriebe (9; 9.3; 9.4; 9.5; 9.6; 9.7; 9.8) eine Baueinheit (27; 27.4) bilden.

26. Antriebssystem nach Anspruch 24, **dadurch gekennzeichnet, daß** das Gehäuse des Getriebes (9; 9.3; 9.4; 9.5; 9.6; 9.7; 9.8) eine Getriebeglocke aufweist, in welche die Anfahreinheit in das Getriebe (9; 9.3; 9.4; 9.5; 9.6; 9.7; 9.8) integriert ist

27. Antriebssystem nach einem der Ansprüche 1 bis 26, **dadurch gekennzeichnet, daß** das Getriebe (9; 9.3; 9.4; 9.5; 9.6; 9.7; 9.8) als automatisiertes Schaltgetriebe ausgeführt ist

28. Antriebssystem nach einem der Ansprüche 1 bis 27, **dadurch gekennzeichnet, daß** das Getriebe (9; 9.3; 9.4; 9.5; 9.6; 9.7; 9.8) als Automatgetriebe ausgeführt ist.

29. Antriebssystem nach einem der Ansprüche 1 bis 27, **dadurch gekennzeichnet, daß** das Getriebe (9; 9.3; 9.4; 9.5;.9.6; 9.7; 9.8) als CVT-Getriebe ausgeführt ist.

## Claims

1. A drive system, especially for motor vehicles, with the following features:
1.1 a drive unit (2; 2.3; 2.4; 2.5; 2.6; 2.7;2.8) and at least one power transfer unit (4; 4.3; 4.4; 4.5; 4.6; 4.7; 4.8) coupled with the drive unit (2; 2.3; 2.4; 2.5; 2.6; 2.7;2.8);
1.2 an electric machine (7; 7.3; 7.4; 7.5; 7.6; 7.7; 7.8) coupled at least indirectly with the drive unit (2; 2.3; 2.4; 2.5; 2.6; 2.7;2.8);
1.3 the power transfer unit (4; 4.3; 4.4; 4.5; 4.6; 4.7; 4.8) comprises at least one starting element (10; 10.3; 10.4; 10.5; 10.6; 10.7; 10.8) in the form of a hydrodynamic coupling (5; 5.3; 5.4; 5.5; 5.6; 5.7; 5.8) and a lock-up clutch (25; 25.3; 25.4; 25.5; 25.6; 25.7; 25.8);
1.4 the rotor (8; 8.3; 8.4; 8.5; 8.6; 8.7; 8.8) or armature of the electric machine (7; 7.3; 7.4; 7.5; 7.6; 7.7; 7.8) is arranged coaxially to the hydrodynamic coupling (5; 5.3; 5.4; 5.5; 5.6; 5.7; 5.8) and can be coupled with the same in a torsionally rigid way;
1.5 the hydrodynamic coupling (5; 5.3; 5.4; 5.5; 5.6; 5.7; 5.8) is controllable, and
1.6 the hydrodynamic coupling (5; 5.3; 5.7; 5.8) comprises a primary blade wheel (11; 11.3; 11.7; 11.8) and a secondary blade wheel (12; 12.3; 12.7; 12.8) and is free from a guide wheel;
1.7 the rotor or armature (8; 8.3; 8.7; 8.8) of the electric machine (7; 7.3; 7.7; 7.8) can be connected in a torsionally rigid manner with the primary blade wheel (11; 11.3; 11.7; 11.8) or a primary blade wheel shell which is coupled with the same in a torsionally rigid manner and encloses the secondary blade wheel (12; 12.3; 12.7; 12.8) in the axial and partly in the radial direction.

2. A drive system according to claim 1, **characterized in that** the primary blade wheel (11; 11.3; 11.7; 11.8) or primary blade wheel shell and the rotor (8; 8.3; 8.7; 8.8) of the electric machine (7; 7.3; 7.7; 7.8) form a modular unit.

3. A drive system according to claim 2, **characterized in that** the primary blade wheel (11; 11.3; 11.7; 11.8) or primary blade wheel shell and the rotor (8; 8.3; 8.7; 8.8) of the electric machine (7; 7.3; 7.7; 7.8) are configured as an integral module.

4. A drive system according to one of the claims 1 to 3, **characterized in that** a device is provided for optionally coupling or uncoupling the rotor (8; 8.3; 8.7; 8.8) of the electric machine (7; 7.3; 7.7; 7.8) from a transmission (9; 9.3; 9.7; 9.8) connected downstream of the hydrodynamic coupling (5; 5.3; 5.7; 5.8).

5. A drive system according to claim 4, **characterized in that** the device is formed by a switchable clutch.

6. A drive system according to one of the claims 4 or 5, **characterized in that** the rotor (8) of the electric machine (7) is joined in a torsionally rigid manner with the drive shaft (6) of the drive unit (2).

7. A drive system according to one of the claims 4 or 5, **characterized in that** at least one device (19; 19.7; 20; 20.8) is provided for optionally coupling or uncoupling the rotor (8.3; 8.7; 8.8) of the electric machine (7.3; 7.7; 7.8) from the drive unit (2.3; 2.7; 2.8).

8. A drive system according to claim 7, **characterized in that** the device (20; 20.8) is arranged in the connection (16; 16.8) between the rotor (8.3; 8.8) and the primary blade wheel (11.3; 11.8) or the primary blade wheel shell of the hydrodynamic clutch (5.3; 5.8).

9. A drive system according to claim 7, **characterized in that** the device (19; 19.7) is arranged between the drive unit (2; 2.7) and the connection (16; 16.7) between the rotor (8; 8.7) and the hydrodynamic coupling (5; 5.7).

10. A drive system according to one of the claims 7 to 9, **characterized in that** the device (19; 19.7; 20; 20.8) is configured as a switchable clutch.

11. A drive system, especially for motor vehicles, with the following features:
11.1 a drive unit (2; 2.3; 2.4; 2.5; 2.6; 2.7;2.8) and at least one power transfer unit (4; 4.3; 4.4; 4.5; 4.6; 4.7; 4.8) coupled with the drive unit (2; 2.3; 2.4; 2.5; 2.6; 2.7;2.8);
11.2 an electric machine (7; 7.3; 7.4; 7.5; 7.6; 7.7; 7.8) coupled at least indirectly with the drive unit (2; 2.3; 2.4; 2.5; 2.6; 2.7;2.8);
11.3 the power transfer unit (4; 4.3; 4.4; 4.5; 4.6; 4.7; 4.8) comprises at least one starting element (10; 10.3; 10.4; 10.5; 10.6; 10.7; 10.8) in the form of a hydrodynamic coupling (5; 5.3; 5.4; 5.5; 5.6; 5.7; 5.8) and a lock-up clutch (25; 25.3; 25.4; 25.5; 25.6; 25.7; 25.8);
11.4 the rotor (8; 8.3; 8.4; 8.5; 8.6; 8.7; 8.8) or armature of the electric machine (7; 7.3; 7.4; 7.5; 7.6; 7.7; 7.8) is arranged coaxially to the hydrodynamic coupling (5; 5.3; 5.4; 5.5; 5.6; 5.7; 5.8) and can be coupled with the same in a torsionally rigid way;
11.5 the hydrodynamic coupling (5; 5.3; 5.4; 5.5; 5.6; 5.7; 5.8) is controllable, and
11.6 the hydrodynamic coupling (5.4; 5.5; 5.6; 5.7; 5.8) comprises a primary blade wheel (11.4; 11.5; 11.7; 11.8) and a secondary blade wheel (12.4; 12.5; 12.6; 12.7; 12.8) and is free from a guide wheel;
11.7 the rotor of the electric machine (7.4; 7.5; 7.6; 7.7; 7.8) can be connected in a torsionally rigid manner with the secondary blade wheel (12.4; 12.5; 12.6; 12.7; 12.8).

12. A drive system according to claim 11, **characterized in that** the secondary blade wheel (12.4; 12.5; 12.6; 12.7; 12.8) and the rotor (8.4; 8.5; 8.6; 8.7; 8.8) of the electric machine (7.4; 7.5; 7.6; 7.7; 7.8) form a modular unit.

13. A drive system according to claim 12, **characterized in that** secondary blade wheel (12.4; 12.5; 12.6; 12.7; 12.8) and the rotor (8.4; 8.5; 8.6; 8.7; 8.8) are configured as an integral module.

14. A drive system according to one of the claims 11 to 13, **characterized in that** a device (22; 23; 19.7; 20.8; 25; 25.4; 25.5; 25.6) for interrupting the power flow between the internal combustion engine (2.4; 2.5; 2.6; 2.7; 2.8) and the rotor (8.4; 8.5; 8.6; 8.7; 8.8) is provided at least in the case of power transfer via the lock-up clutch (25; 25.4; 25.5; 25.6).

15. A drive system according to claim 14, **characterized in that** a device (22; 23; 19.7; 20.8; 25) for interrupting the power flow between the internal combustion engine (2.5; 2.6; 2.7) and the rotor (8.5; 8.6; 8.7) is provided at least in the case of power transfer via the hydrodynamic coupling (5.5; 5.6; 5.7).

16. A drive system according to claim 14, **characterized in that** the device is formed by the lock-up clutch (25.4; 25.5; 25.6).

17. A drive system according to one of the claims 14 to 16, **characterized in that** the device is formed by a device (23; 19.7) for optionally realizing or interrupting the power transfer between the drive unit (2.5; 2.7) and the connection (16.5; 16.7) between the primary blade wheel (11.5; 11.7) and the rotor (8.5; 8.7).

18. A drive system according to one of the claims 14 to 16, **characterized in that** the device is formed by a device (22) for optionally coupling or uncoupling the rotor (8.6) from the secondary blade wheel (12.6).

19. A drive system according to one of the claims 14 to 16, **characterized in that** the device is formed by a device (20.8) for optionally coupling or uncoupling the rotor (8.8) from the primary blade wheel (11.6).

20. A drive system according to one of the claims 1 to 19, **characterized in that** the hydrodynamic coupling (5; 5.3; 5.4; 5.5; 5.6; 5.7; 5.8) can be operated at least with a partial filling.

21. A drive system according to one of the claims 1 to 20, **characterized in that** a device is provided for influencing the degree of filling of the hydrodynamic coupling (5; 5.3; 5.4; 5.5; 5.6; 5.7; 5.8).

22. A drive system according to one of the claims 1 to 21, **characterized in that** an apparatus for damping oscillations (18.1; 18.2, 18.3; 18.4; 18.5; 32.1; 32.2; 32.3; 32.4; 23.5; 33.1; 33.2; 33.3; 33.4; 33.5; 33.6) is provided which can be arranged according to at least one of the following possibilities for arrangement:
a) between the drive unit (2; 2.3; 2.7; 2.8) and the connection between primary blade wheel (11; 11.3; 11.7; 11.8) and rotor (8; 8.3; 8.7; 8.8);
b) between rotor (8.7; 8.8) and primary blade wheel (11.7; 11.8);
c) between rotor (8.7; 8.8) and secondary blade wheel (12.7; 12.8);
d) before the lock-up clutch (25; 25.4; 25.5; 25.6; 25.7; 25.8) or after the lock-up clutch (25; 25.4; 25.5; 25.6; 25.7; 25.8); .
e) behind the coupling between secondary blade wheel (12.4; 12.5; 12.6; 12.7; 12.8) and rotor (8.4; 8.5; 8.6; 8.7; 8.8);
f) behind the coupling between secondary blade wheel (12.7; 12.8) and lock-up clutch (25.7; 25.8).

23. A drive system according to claim 22, **characterized in that** the apparatus for damping oscillations is a hydraulic torsional vibration damper.

24. A drive system according to one of the claims 1 to 23, **characterized in that** the hydrodynamic coupling (5; 5.3; 5.4; 5.5; 5.6; 5.7; 5.8) as a starting element (10; 10.3; 10.4; 10.5; 10.6; 10.7; 10.8) is a component of a starting unit (24) which comprises a transmission (9; 9.3; 9.4; 9.5; 9.6; 9.7; 9.8) which is connected in series.

25. A drive system according to claim 24, **characterized in that** the starting unit (24) has a separate housing which is flanged onto the housing of the transmission (9; 9.3; 9.4; 9.5; 9.6; 9.7; 9.8), and starting unit and transmission (9; 9.3; 9.4; 9.5; 9.6; 9.7; 9.8) form a modular unit (27; 27.4).

26. A drive system according to claim 24, **characterized in that** the housing of the transmission (9; 9.3; 9.4; 9.5; 9.6; 9.7; 9.8) comprises a transmission bell housing in which the starting unit is integrated in the transmission (9; 9.3; 9.4; 9.5; 9.6; 9.7; 9.8).

27. A drive system according to one of the claims 1 to 26, **characterized in that** the transmission (9; 9.3; 9.4; 9.5; 9.6; 9.7; 9.8) is configured as an automated standard transmission.

28. A drive system according to one of the claims 1 to 27, **characterized in that** the transmission (9; 9.3; 9.4; 9.5; 9.6; 9.7; 9.8) is configured as an automatic transmission.

29. A drive system according to one of the claims 1 to 27, **characterized in that** the transmission (9; 9.3; 9.4; 9.5; 9.6; 9.7; 9.8) is configured as a CVT transmission.

## Revendications

1. Système d'entraînement, en particulier pour des véhicules à moteur, possédant les caractéristiques suivantes :
1.1 un groupe d'entraînement (2 ; 2.3 ; 2.4 ; 2.5 ; 2.6 ; 2.7 ; 2.8) et au moins une unité de transmission de la puissance (4 ; 4.3 ; 4.4 ; 4.5 ; 4.6 ; 4.7 ; 4.8) couplée au groupe d'entraînement (2 ; 2.3 ; 2.4 ; 2.5 ; 2.6 ; 2.7 ; 2.8) ;
1.2 une machine électrique (7 ; 7.3 ; 7.4 ; 7.5 ; 7.6 ; 7.7 ; 7.8) couplée de manière au moins indirecte avec le groupe d'entraînement (2 ; 2.3 ; 2.4 ; 2.5 ; 2.6 ; 2.7 ; 2.8) ;
1.3 l'unité de transmission de la puissance (4 ; 4.3 ; 4.4 ; 4.5 ; 4.6 ; 4.7 ; 4.8) comprend au moins un élément démarreur (10 ; 10.3 ; 10.4 ; 10.5 ; 10.6 ; 10.7 ; 10.8) prenant la forme d'un embrayage hydrodynamique (5 ; 5.3 ; 5.4 ; 5.5 ; 5.6 ; 5.7 ; 5.8) et un embrayage de prise directe (25 ; 25.3 ; 25.4 ; 25.5 ; 25.6 ; 25.7 ; 25.8) ;
1.4 le rotor (8 ; 8.3 ; 8.4 ; 8.5 ; 8.6 ; 8.7 ; 8.8) de la machine électrique (7 ; 7.3 ; 7.4 ; 7.5 ; 7.6 ; 7.7 ; 7.8) est coaxial de l'embrayage hydrodynamique (5 ; 5.3 ; 5.4 ; 5.5 ; 5.6 ; 5.7 ; 5.8) et peut être couplé avec celui-ci de manière solidaire en rotation ;
1.5 l'embrayage hydrodynamique (5 ; 5.3 ; 5.4 ; 5.5 ; 5.6 ; 5.7 ; 5.8) est contrôlable ; et
1.6 l'embrayage hydrodynamique (5 ; 5.3 ; 5.7 ; 5.8) comprend une roue à aubes primaire (11 ; 11.3 ; 11.7 ; 11.8) et une roue à aubes secondaire (12 ; 12.3 ; 12.7 ; 12.8) et ne possède pas d'aube directrice ;
1.7 le rotor (8 ; 8.3 ; 8.7 ; 8.8) de la machine électrique (7 ; 7.3 ; 7.7 ; 7.8) peut être relié de manière solidaire en rotation à la roue à aubes primaire (11 ; 11.3 ; 11.7 ; 11.8) ou à une enveloppe de roue à aubes primaire couplée avec celle-ci de manière solidaire en rotation et entourant la roue à aubes secondaire (12 ; 12.3 ; 12.7 ; 12.8) dans le sens axial et partiellement dans le sens radial.

2. Système d'entraînement selon la revendication 1, **caractérisé en ce que** la roue à aubes primaire (11 ; 11.3 ; 11.7 ; 11.8) ou l'enveloppe de roue à aubes primaire et le rotor (8 ; 8.3 ; 8.7 ; 8.8) de la machine électrique (7 ; 7.3 ; 7.7 ; 7.8) forment une unité de construction.

3. Système d'entraînement selon la revendication 2, **caractérisé en ce que** la roue à aubes primaire (11 ; 11.3 ; 11.7 ; 11.8) ou l'enveloppe de roue à aubes primaire et le rotor (8 ; 8.3 ; 8.7 ; 8.8) de la machine électrique (7 ; 7.3 ; 7.7 ; 7.8) sont conçus comme une unité de construction intégrale.

4. Système d'entraînement selon l'une quelconque des revendications 1 à 3, **caractérisé en ce qu'**il est prévu un dispositif pour le couplage et le découplage sélectifs du rotor (8 ; 8.3 ; 8.7 ; 8.8) de la machine électrique (7 ; 7.3 ; 7.7 ; 7.8) sur un engrenage (9 ; 9.3 ; 9.7 ; 9.8) monté en aval de l'embrayage hydrodynamique (5 ; 5.3 ; 5.7 ; 5.8).

5. Système d'entraînement selon la revendication 4, **caractérisé en ce que** le dispositif est formé par un embrayage commutable.

6. Système d'entraînement selon l'une quelconque des revendications 4 ou 5, **caractérisé en ce que** le rotor (8) de la machine électrique (7) et relié de manière solidaire en rotation avec l'arbre d'entraînement (6) du groupe d'entraînement (2).

7. Système d'entraînement selon l'une quelconque des revendications 4 ou 5, **caractérisé en ce qu'**il est prévu au moins un dispositif (19 ; 19.7 ; 20 ; 20.8) pour le couplage et le découpage sélectifs du rotor (8.3 ; 8.7 ; 8.8) de la machine électrique (7.3 ; 7.7 ; 7.8) sur le groupe d'entraînement (2.3 ; 2.7 ; 2.8).

8. Système d'entraînement selon la revendication 7, **caractérisé en ce que** le dispositif (20 ; 20.8) est installé dans la communication (16 ; 16.8) entre le rotor (8.3 ; 8.8) et la roue à aubes primaire (11.3 ; 11.8) ou l'enveloppe de roue à aubes primaire de l'embrayage hydrodynamique (5.3 ; 5.8).

9. Système d'entraînement selon la revendication 7, **caractérisé en ce que** le dispositif (19 ; 19.7) est installé entre le groupe d'entraînement (2 ; 2.7) et la communication (16 ; 16.7) entre le rotor (8 ; 8.7) et l'embrayage hydrodynamique (5 ; 5.7).

10. Système d'entraînement selon l'une quelconque des revendications 7 à 9, **caractérisé en ce que** le dispositif (19 ; 19.7 ; 20 ; 20.8) est conçu comme un embrayage commutable.

11. Système d'entraînement, en particulier pour des véhicules à moteur, possédant les caractéristiques suivantes :
11.1 un groupe d'entraînement (2 ; 2.3 ; 2.4 ; 2.5 ; 2.6 ; 2.7 ; 2.8) et au moins une unité de transmission de la puissance (4 ; 4.3 ; 4.4 ; 4.5 ; 4.6 ; 4.7 ; 4.8) couplée au groupe d'entraînement (2 ; 2.3 ; 2.4 ; 2.5 ; 2.6 ; 2.7 ; 2.8) ;
11.2 une machine électrique (7 ; 7.3 ; 7.4 ; 7.5 ; 7.6 ; 7.7 ; 7.8) couplée de manière au moins indirecte avec le groupe d'entraînement (2 ; 2.3 ; 2.4 ; 2.5 ; 2.6 ; 2.7 ; 2.8) ;
11.3 l'unité de transmission de la puissance (4 ; 4.3 ; 4.4 ; 4.5 ; 4.6 ; 4.7 ; 4.8) comprend au moins un élément démarreur (10 ; 10.3 ; 10.4 ; 10.5 ; 10.6 ; 10.7 ; 10.8) prenant la forme d'un embrayage hydrodynamique (5 ; 5.3 ; 5.4 ; 5.5 ; 5.6 ; 5.7 ; 5.8) et un embrayage de prise directe (25 ; 25.3 ; 25.4 ; 25.5 ; 25.6 ; 25.7 ; 25.8) ;
11.4 le rotor (8 ; 8.3 ; 8.4 ; 8.5 ; 8.6 ; 8.7 ; 8.8) de la machine électrique (7 ; 7.3 ; 7.4 ; 7.5 ; 7.6 ; 7.7 ; 7.8) est coaxial de l'embrayage hydrodynamique (5 ; 5.3 ; 5.4 ; 5.5 ; 5.6 ; 5.7 ; 5.8) et peut être couplé avec celui-ci de manière solidaire en rotation ;
11.5 l'embrayage hydrodynamique (5 ; 5.3 ; 5.4 ; 5.5 ; 5.6 ; 5.7 ; 5.8) est contrôlable ; et
11.6 l'embrayage hydrodynamique (5.4 ; 5.5 ; 5.6 ; 5.7 ; 5.8) comprend une roue à aubes primaire (11.4 ; 11.5 ; 11.7 ; 11.8) et une roue à aubes secondaire (12.4 ; 12.5 ; 12.6 ; 12.7 ; 12.8) et ne possède pas d'aube directrice ;
11.7 le rotor de la machine électrique (7.4 ; 7.5 ; 7.6 ; 7.7 ; 7.8) peut être relié de manière solidaire en rotation à la roue à aubes secondaire (12.4 ; 12.5 ; 12.6 ; 12.7 ; 12.8).

12. Système d'entraînement selon la revendication 1, **caractérisé en ce que** la roue à aubes secondaire (12.4 ; 12.5 ; 12.6 ; 12.7 ; 12.8) et le rotor (8.4 ; 8.5 ; 8.6 ; 8.7 ; 8.8) de la machine électrique (7.4 ; 7.5 ; 7.6 ; 7.7 ; 7.8) forment une unité de construction.

13. Système d'entraînement selon la revendication 12, **caractérisé en ce que** la roue à aubes secondaire (12.4 ; 12.5 ; 12.6 ; 12.7 ; 12.8) et le rotor (8.4 ; 8.5 ; 8.6 ; 8.7 ; 8.8) sont conçus comme une unité de construction intégrale.

14. Système d'entraînement selon l'une quelconque des revendications 11 à 13, **caractérisé en ce qu'**il est prévu un dispositif (22 ; 23 ; 19.7 ; 20.8 ; 25 ; 25.4 ; 25.5 ; 25.6) destiné à interrompre le flux de puissance entre le moteur à combustion interne (2.4 ; 2.5 ; 2.6 ; 2.7 ; 2.8) et le rotor (8.4 ; 8.5 ; 8.6 ; 8.7; 8.8) au moins lors de la transmission de la puissance par l'embrayage de prise directe (25 ; 25.4 ; 25.5 ; 25.6).

15. Système d'entraînement selon la revendication 14, **caractérisé en ce qu'**il est prévu un dispositif (22 ; 23 ; 19.7 ; 20.8 ; 25) destiné à interrompre le flux de puissance entre le moteur à combustion interne (2.5 ; 2.6 ; 2.7) et le rotor (8.5 ; 8.6 ; 8.7) au moins lors de la transmission de la puissance par l'embrayage hydrodynamique (5.5 ; 5.6 ; 5.7).

16. Système d'entraînement selon la revendication 14, **caractérisé en ce que** le dispositif est formé par l'embrayage de prise directe (25.4 ; 25.5 ; 25.6).

17. Système d'entraînement selon l'une quelconque des revendications 14 à 16, **caractérisé en ce que** le dispositif est formé par un dispositif (23 ; 19.7) pour la réalisation ou l'interruption sélective de la transmission de puissance entre le groupe d'entraînement (2.5 ; 2.7) et la communication (16.5 ; 16.7) entre la roue à aubes primaire (11.5 ; 11.7) et le rotor (8.5 ; 8.7).

18. Système d'entraînement selon l'une quelconque des revendications 14 à 16, **caractérisé en ce que** le dispositif est formé par un dispositif (22) pour le couplage et le découplage sélectifs du rotor (8.6) et de la roue à aubes secondaire (12.6).

19. Système d'entraînement selon l'une quelconque des revendications 14 à 16, **caractérisé en ce que** le dispositif est formé par un dispositif (20.8) pour le couplage et le découplage sélectifs du rotor (8.8) et de la roue à aubes primaire (11.6).

20. Système d'entraînement selon l'une quelconque des revendications 1 à 19, **caractérisé en ce que** l'embrayage hydrodynamique (5 ; 5.3 ; 5.4 ; 5.5 ; 5.6 ; 5.7 ; 5.8) peut fonctionner au moins avec un remplissage partiel.

21. Système d'entraînement selon l'une quelconque des revendications 1 à 20, **caractérisé en ce qu'**il est prévu un dispositif pour influer sur le niveau de remplissage de l'embrayage hydrodynamique (5 ; 5.3 ; 5.4 ; 5.5 ; 5.6 ; 5.7 ; 5.8).

22. Système d'entraînement selon l'une quelconque des revendications 1 à 21, **caractérisé en ce qu'**il est prévu un dispositif pour l'amortissement des vibrations (18.1 ; 18.2 ; 18.3 ; 18.4 ; 18.5 ; 32.1 ; 32.2 ; 32.3 ; 32.4 ; 32.5 ; 33.1 ; 33.2 ; 33.3 ; 33.4 ; 33.5 ; 33.6), qui peut être disposé selon l'une au moins des possibilités de disposition suivantes :
a) entre le groupe d'entraînement (2 ; 2.3 ; 2.7 ; 2.8) et la communication entre la roue à aubes primaire (11 ; 11.3 ; 11.7 ; 11.8) et le rotor (8 ; 8.3 ; 8.7 ; 8.8) ;
b) entre le rotor (8.7 ; 8.8) et la roue à aubes primaire (11.7 ; 11.8) ;
c) entre le rotor (8.7 ; 8.8) et la roue à aubes secondaire (12.7 ; 12.8) ;
d) avant l'embrayage de prise directe (25 ; 25.4 ; 25.5 ; 25.6 ; 25.7 ; 25.8) ou après l'embrayage de prise directe (25 ; 25.4 ; 25.5 ; 25.6 ; 25.7 ; 25.8) ;
e) après le couplage entre la roue à aubes secondaire (12.4 ; 12.5 ; 12.6 ; 12.7 ; 12.8) et le rotor (8.4 ; 8.5 ; 8.6 ; 8.7 ; 8.8) ;
f) après le couplage entre la roue à aubes secondaire (12.7 ; 12.8) et l'embrayage de prise directe (25.7 ; 25.8).

23. Système d'entraînement selon la revendication 22, **caractérisé en ce que** le dispositif pour l'amortissement des vibrations est un amortisseur de vibrations hydraulique à torsion.

24. Système d'entraînement selon l'une quelconque des revendications 1 à 23, **caractérisé en ce que** l'embrayage hydrodynamique (5 ; 5.3 ; 5.4 ; 5.5 ; 5.6 ; 5.7 ; 5.8) servant d'élément démarreur (10 ; 10.3 ; 10.4 ; 10.5 ; 10.6 ; 10.7 ; 10.8) fait partie d'une unité de démarrage (24) en aval de laquelle est monté un engrenage (9 ; 9.3 ; 9.4 ; 9.5 ; 9.6 ; 9.7 ; 9.8).

25. Système d'entraînement selon la revendication 24, **caractérisé en ce que** l'unité de démarrage (24) possède son propre boîtier, qui est fixé par une bride sur le carter de l'engrenage (9 ; 9.3 ; 9.4 ; 9.5 ; 9.6 ; 9.7 ; 9.8), et l'unité de démarrage et l'engrenage (9 ; 9.3 ; 9.4 ; 9.5 ; 9.6 ; 9.7 ; 9.8) forment une unité de construction (27 ; 27.4).

26. Système d'entraînement selon la revendication 24, **caractérisé en ce que** le carter de l'engrenage (9 ; 9.3 ; 9.4 ; 9.5 ; 9.6 ; 9.7 ; 9.8) présente une cloche d'embrayage dans laquelle l'unité de démarrage est intégrée dans l'engrenage (9 ; 9.3 ; 9.4 ; 9.5 ; 9.6 ; 9.7 ; 9.8).

27. Système d'entraînement selon l'une quelconque des revendications 1 à 26, **caractérisé en ce que** l'engrenage (9 ; 9.3 ; 9.4 ; 9.5 ; 9.6 ; 9.7 ; 9.8) est construit comme une boîte de vitesses automatisée.

28. Système d'entraînement selon l'une quelconque des revendications 1 à 27, **caractérisé en ce que** l'engrenage (9 ; 9.3 ; 9.4 ; 9.5 ; 9.6 ; 9.7 ; 9.8) est construit comme une boîte de vitesses automatique.

29. Système d'entraînement selon l'une quelconque des revendications 1 à 27, **caractérisé en ce que** l'engrenage (9 ; 9.3 ; 9.4 ; 9.5 ; 9.6 ; 9.7 ; 9.8) est construit comme une boîte de vitesses CVT.
